# EUROPÄISCHE PATENTSCHRIFT

(11) **EP 3 186 119 B1**
(45) Veröffentlichungstag und Bekanntmachung des Hinweises auf die Patenterteilung: **23.05.2018**
(21) Anmeldenummer: 15749986.4
(22) Anmeldetag: 06.08.2015
(51) Int. Cl.: B60T 8/36

(54) **VENTILEINHEIT ZUR DRUCKMODULATION IN EINER DRUCKLUFT-BREMSANLAGE**
VALVE UNIT FOR MODULATING PRESSURE IN AN AIR-BRAKE SYSTEM
UNITÉS DE SOUPAPE POUR LA MODULATION EN PRESSION DANS UNE INSTALLATION DE FREINAGE PNEUMATIQUE

(30) Priorität: 27.08.2014 DE 102014012712
(43) Veröffentlichungstag der Anmeldung: 05.07.2017
(73) Patentinhaber: WABCO GmbH, 30453 Hannover (DE)
(72) Erfinder: KNOKE, Stefan, 30657 Hannover (DE); RUNGE, Karsten, 31832 Springe (DE); TEICHMANN, Andreas, 30916 Isernhagen (DE); TORHOFF, Ingo, 30890 Barsinghausen (DE)
(74) Vertreter: Lauerwald, Jörg
(86) Internationale Anmeldenummer: PCT/EP2015/001628
(87) Internationale Veröffentlichungsnummer: WO 2016/029994

(56) Entgegenhaltungen:
- EP-A1- 0 439 303
- EP-A2- 0 373 551
- EP-A2- 1 128 106
- EP-B1- 0 498 584
- WO-A1-2008/034524
- DE-A1- 2 517 571
- DE-A1- 2 733 883
- DE-B3-102008 028 439
- US-A- 4 626 045

## Beschreibung

Die Erfindung betrifft eine Ventileinheit zur Druckmodulation in einer Druckluft-Bremsanlage, mit einem Bremsdruckeingang, einem Bremsdruckausgang, und einem Entlüftungsausgang, sowie einem als Membranventil ausgebildeten Einlassventil, einem als Membranventil ausgebildeten Auslassventil, und jeweils einem als 3/2-Wege-Magnetventil ausgebildeten Vorsteuerventil pro Membranventil, welche in einem länglichen Ventilgehäuse angeordnet sind, das mit einer in Einbaulage weitgehend horizontalen Teilungsebene in ein Basisgehäuse und einen Gehäusedeckel unterteilt ist, wobei der Bremsdruckeingang und der Bremsdruckausgang in Längsrichtung mit horizontaler Ausrichtung weitgehend axial gegenüberliegend und der Entlüftungsausgang dazwischen vertikal nach unten gerichtet in dem Basisgehäuse angeordnet sind, die Membranventile in dem Basisgehäuse zwischen dem Bremsdruckeingang und dem Bremsdruckausgang mit parallelen Betätigungsachsen und einer Anordnung der Membranen in einer gemeinsamen, weitgehend der Teilungsebene entsprechenden Membranebene unter Einspannung zwischen dem Basisgehäuse und dem Gehäusedeckel in Längsrichtung hintereinander angeordnet sind, und die Vorsteuerventile in dem Gehäusedeckel angeordnet sind.

In blockiergeschützten, also mit Antiblockiersystemen ausgerüsteten Druckluft-Bremsanlagen von Radfahrzeugen, wie Kraftfahrzeugen und Schienenfahrzeugen, ist in den von einem Bremsventil zu den Radbremszylindern führenden Bremsleitungen jeweils eine Ventileinheit zur Druckmodulation vorgesehen. Diese Ventileinheit weist ein Einlassventil und ein Auslassventil auf. Mit dem Einlassventil ist ein Bremsdruckausgang, an dem ein zu mindestens einem Radbremszylinder führender Abschnitt einer Bremsleitung angeschlossen ist, wechselweise mit einem Bremsdruckeingang, an dem ein von dem Bremsventil kommender Abschnitt der Bremsleitung angeschlossen ist, verbindbar oder gegenüber diesem absperrbar. Mit dem Auslassventil ist der Bremsdruckausgang wechselweise mit einem Entlüftungsausgang verbindbar oder gegenüber diesem absperrbar, wobei der Entlüftungsausgang zumeist über ein Rückschlagventil und/oder ein Sieb in die Umgebungsluft führt.

Aufgrund großer zu schaltender Volumenströme und entsprechend großer zu öffnender sowie zu schließender Strömungsquerschnitte sind das Einlassventil und das Auslassventil üblicherweise als pneumatisch betätigbare Membranventile ausgebildet, die über jeweils ein als 3/2-Wege-Magnetventil ausgebildetes Vorsteuerventil ansteuerbar sind. Ein Membranventil weist eine weitgehend kreisscheibenförmige flexible Membran auf, die an ihrem Rand in einem Ventilgehäuse eingespannt ist. Auf der axialen Innenseite der Membran, auf der die mit den Drucklufteingang und Druckluftausgängen verbundenen Strömungskanäle angeordnet sind, sind ein zentraler kreisrunder Ventilsitz eines zylindrischen inneren Strömungskanals und ein konzentrisch dazu angeordneter ringförmiger äußerer Strömungskanal angeordnet. Auf der axial gegenüberliegenden Außenseite der Membran ist eine Steuerkammer angeordnet, die durch das zugeordnete Vorsteuerventil wechselweise mit einem üblicherweise am Bremsdruckeingang entnommenen hohen Steuerdruck oder mit einem zumeist am Entlüftungsausgang entnommenen niedrigen Steuerdruck (Umgebungsdruck) beaufschlagbar ist. Bei Beaufschlagung der Steuerkammer mit dem hohen Steuerdruck wird die Membran gegen den Ventilsitz gedrückt, wodurch der innere Strömungskanal gegenüber dem äußeren Strömungskanal abgesperrt wird, was dem geschlossenen Zustand des betreffenden Membranventils entspricht. Bei Beaufschlagung der Steuerkammer mit dem niedrigen Steuerdruck wird die durch Formgebung zumeist selbsttätig an dem Ventilsitz anliegende Membran durch den in den Strömungskanälen herrschenden Bremsdruck von dem Ventilsitz abgehoben und in Richtung der Steuerkammer verschoben, wodurch der innere Strömungskanal mit dem äußeren Strömungskanal verbunden wird, was dem geöffneten Zustand des betreffenden Membranventils entspricht.

Eine,derartige Ventileinheit weist die Schaltfunktionen "Druckaufbau", "Druckhalten" und "Druckabbau" auf. In der Schaltfunktion "Druckaufbau" der Ventileinheit ist das Einlassventil geöffnet und das Auslassventil geschlossen, so dass der über das Bremsventil am Bremsdruckeingang eingesteuerte Bremsdruck unverändert an den Bremsdruckausgang und an mindestens einen daran angeschlossenen Radbremszylinder weitergeleitet wird. Da die Schaltfunktion "Druckaufbau" dem Ruhezustand der Ventileinheit entspricht, verbindet das Vorsteuerventil des Einlassventils im unbestromten Zustand seiner Magnetspule die Steuerkammer des Einlassventils mit einer den niedrigen Steuerdruck führenden Steuerleitung. Ebenso verbindet das Vorsteuerventil des Auslassventils im unbestromten Zustand seiner Magnetspule die Steuerkammer des Auslassventils mit einer den hohen Steuerdruck führenden Steuerleitung.

In der Schaltfunktion "Druckhalten" der Ventileinheit ist das Einlassventil und das Auslassventil geschlossen, so dass der am Bremsdruckausgang und dem mindestens einen daran angeschlossenen Radbremszylinder anliegende Bremsdruck dann konstant gehalten wird. Zur Einstellung dieser Schaltfunktion wird nur das Vorsteuerventil des Einlassventils durch Bestromung seiner Magnetspule umgeschaltet und damit die Steuerkammer des Einlassventils mit dem hohen Steuerdruck beaufschlagt.

In der Schaltfunktion "Druckabbau" der Ventileinheit ist das Einlassventil geschlossen und das Auslassventil geöffnet, so dass der Bremsdruckausgang und der mindestens eine daran angeschlossene Radbremszylinder dann entlüftet werden. Zur Einstellung dieser Schaltfunktion werden beide Vorsteuerventile durch Bestromung ihrer Magnetspulen umgeschaltet und damit die Steuerkammer des Einlassventils mit dem hohen Steuerdruck und die Steuerkammer des Auslassventils mit dem niedrigen Steuerdruck beaufschlagt.

Die Schaltfunktionen "Druckhalten" und "Druckabbau" der Ventileinheit sind Blockierschutzfunktionen, mit denen ein bremsbedingtes Blockieren des mindestens einen zugeordneten Rades vermieden werden soll. Diese Schaltfunktionen werden durch eine entsprechende Ansteuerung der Vorsteuerventile von einem Steuergerät des Antiblockiersystems gesteuert, in dem die Signale von Raddrehzahlsensoren zur Erkennung eines bevorstehenden oder schon eingetretenen Blockierens der gebremsten Räder ausgewertet werden.

Hinsichtlich der geometrischen Anordnung der Drucklufteingänge und Druckluftausgänge, der als Membranventile ausgebildeten Einlassventile und Auslassventile, und der als Magnetventile ausgebildeten Vorsteuerventile in einem Ventilgehäuse sind unterschiedliche Ausführungen derartiger Ventileinheiten bekannt.

So sind beispielsweise aus den Druckschriften DE 22 24 274 C3, DE 34 08 123 A1, DE 38 25 549 A1, DE 40 05 608 A1, EP 0 439 303 A1, US4,626,045 A und DE 40 08 095 A1 verschiedene Ausführungsvarianten von Ventileinheiten bekannt, bei denen die Membranebenen des Einlassventils und des Auslassventils jeweils senkrecht zueinander oder parallel zueinander ausgerichtet sind. Die als 3/2-Wege-Magnetventile ausgebildeten Vorsteuerventile sind bei diesen Ventileinheiten entweder mit unterschiedlicher Ausrichtung ihrer Betätigungsachsen nahe des jeweils zugeordneten Membranventils oder parallel und radial benachbart zueinander in unterschiedlichen Bereichen des jeweiligen Ventilgehäuses angeordnet.

Aufgrund der Anordnung der Drucklufteingänge und der Druckluftausgänge, der Einlassventile und der Auslassventile sowie der Vorsteuerventile ist bei den vorgenannten Ventileinheiten eine mehrteilige Ausführung und eine aufwendige mechanische Bearbeitung des jeweiligen Ventilgehäuses erforderlich. Besonders die jeweilige Anordnung der Membranen des Einlassventils und des Auslassventils in unterschiedlichen Membranebenen erfordert ein mehrfaches Umspannen der Gehäuseteile zur mechanischen Bearbeitung der Ventilsitze und der Kanalränder beziehungsweise Kammerränder, zwischen denen die Membranen eingespannt werden. Zur Verringerung des Herstellungsaufwands sind daher bereits Ventileinheiten vorgeschlagen worden, bei denen die Membranventile mit parallelen Betätigungsachsen und einer Anordnung der Membranen in einer gemeinsamen, weitgehend einer Teilungsebene zwischen zwei Gehäuseteilen entsprechenden Membranebene angeordnet sind.

Eine derartige Ventileinheit ist beispielsweise in der DE 25 17 571 A1 beschrieben. Bei dieser bekannten Ventileinheit ist ein längliches Ventilgehäuse mit einer in Einbaulage horizontalen Teilungsebene in ein Gehäuseunterteil und ein Gehäuseoberteil unterteilt. Der Bremsdruckeingang und der Entlüftungsausgang sind in Längsrichtung mit horizontaler Ausrichtung weitgehend axial gegenüberliegend positioniert und der Bremsdruckausgang mit ebenfalls horizontaler Ausrichtung weitgehend mittig rechtwinkelig dazu in dem Gehäuseunterteil angeordnet. Die Membranventile sind in dem Gehäuseunterteil zwischen dem Bremsdruckeingang und dem Entlüftungsausgang mit parallelen Betätigungsachsen und einer Anordnung der Membranen in einer gemeinsamen, weitgehend der Teilungsebene entsprechenden Membranebene unter Einspannung zwischen dem Gehäuseunterteil und dem Gehäuseoberteil in Längsrichtung des Ventilgehäuses hintereinander angeordnet. Das Vorsteuerventil des Einlassventils und das Vorsteuerventil des Auslassventils sind mit jeweils vertikaler Ausrichtung ihrer Betätigungsachsen und gleichen Schaltrichtungen oberhalb des jeweils zugeordneten Membranventils radial benachbart zueinander in dem Gehäuseoberteil angeordnet, wodurch die Bauhöhe des Gehäuseoberteils und damit der gesamten Ventileinheit relativ groß ist.

Bei einer weiteren, aus der EP 0 498 584 B1 bekannten derartigen Ventileinheit ist das Ventilgehäuse mit einer in Einbaulage vertikalen Teilungsebene in ein Eingangsgehäuse und ein Ausgangsgehäuse unterteilt. Der Bremsdruckeingang ist mit horizontaler Ausrichtung oben in dem Eingangsgehäuse angeordnet. Der Bremsdruckausgang ist mit horizontaler Ausrichtung dem Bremsdruckeingang weitgehend axial gegenüberliegend in dem Ausgangsgehäuse angeordnet, wogegen der Entlüftungsausgang vertikal nach unten gerichtet in dem Ausgangsgehäuse angeordnet ist. Die Membranventile sind in dem Ausgangsgehäuse zwischen dem Bremsdruckausgang und dem Entlüftungsausgang mit parallelen Betätigungsachsen sowie einer Anordnung der Membranen in einer gemeinsamen, weitgehend der Teilungsebene entsprechenden Membranebene unter Einspannung zwischen dem Ausgangsgehäuse und dem Eingangsgehäuse übereinander angeordnet. Das Vorsteuerventil des Einlassventils und das Vorsteuerventil des Auslassventils sind mit jeweils horizontaler Ausrichtung ihrer Betätigungsachsen und entgegengesetzten Schaltrichtungen in etwa mittig rechtwinkelig zu den Drucklufteingängen und Druckluftausgängen sowie parallel zu der Teilungsebene radial benachbart zueinander in dem Eingangsgehäuse angeordnet. Die Magnetspulen der Vorsteuerventile sind in einem Magnetblock angeordnet, der zusammen mit den eingesetzten mechanischen Bauteilen der Magnetventile zwischen einem Gehäuseoberteil und einem Gehäuseunterteil des Eingangsgehäuses angeordnet ist. Zur Abdichtung sind zwischen dem Magnetblock, den Ventilblöcken und den Ventilsitzen der Magnetventile einerseits und dem Gehäuseoberteil sowie dem Gehäuseunterteil des Eingangsgehäuses andererseits Dichtungen beziehungsweise Dichtringe angeordnet. Zur Fixierung des Gehäuseoberteils und des Gehäuseunterteils mit dem Magnetblock der Magnetventile einerseits sowie der Einspannung der Membranen der Membranventile andererseits sind das Gehäuseoberteil und das Gehäuseunterteil des Eingangsgehäuses jeweils mit dem Ausgangsgehäuse verschraubt. Diese bekannte Ventileinheit besteht somit aus vielen Bauteilen, die relativ schwierig zu montieren sind. Die Herstellung und Montage dieser bekannten Ventileinheit ist daher relativ kompliziert und aufwendig.

Schließlich ist in der DE 10 2008 028 439 B3 eine derartige Ventileinheit beschrieben, bei der ein längliches Ventilgehäuse mit in Einbaulage weitgehend horizontalen Teilungsebenen in ein Gehäuseunterteil, ein Gehäuseoberteil und eine dazwischen angeordnete Zwischenplatte unterteilt ist. Der Bremsdruckeingang, der Bremsdruckausgang und der Entlüftungsausgang sind mit jeweils horizontaler Ausrichtung in dem Gehäuseunterteil angeordnet. Die Membranventile sind in dem Gehäuseunterteil mit parallelen Betätigungsachsen und einer Anordnung der Membranen in einer gemeinsamen, weitgehend der Teilungsebene zwischen dem Gehäuseunterteil und der Zwischenplatte entsprechenden Membranebene unter Einspannung zwischen dem Gehäuseunterteil und der Zwischenplatte in Längsrichtung hintereinander angeordnet. Das Vorsteuerventil des Einlassventils und das Vorsteuerventil des Auslassventils sind mit jeweils vertikaler Ausrichtung ihrer Betätigungsachsen und gleichen Schaltrichtungen in etwa mittig oberhalb der Membranventile radial benachbart zueinander in dem Gehäuseoberteil angeordnet, wodurch die Bauhöhe des Gehäuseoberteils und der gesamten Ventileinheit relativ groß ist. Die Zwischenplatte ist mit dem Gehäuseunterteil verschraubt. Das Gehäuseoberteil ist über einen äußeren Deckel mit der Zwischenplatte oder dem Gehäuseunterteil verschraubt. In der Teilungsebene zwischen dem Gehäuseoberteil und der Zwischenplatte sind Dichtungen angeordnet. Auch diese Ventileinheit besteht somit aus recht vielen Bauteilen, die allerdings relativ einfach von oben montierbar sind. Dennoch ist die Herstellung und Montage dieser bekannten Ventileinheit auch relativ aufwendig.

Der vorliegenden Erfindung liegt daher die Aufgabe zugrunde, eine Ventileinheit der eingangs genannten Bauart zur Druckmodulation in einer Druckluft-Bremsanlage vorzuschlagen, die in Verbindung mit guten Steuerungseigenschaften, also insbesondere kurzen Schaltzeiten der Membranventile, kompakte Abmessungen aufweist und einfach montierbar ist.

Die Aufgabe der Erfindung ist in Verbindung mit den Merkmalen des Oberbegriffs des Anspruchs 1 dadurch gelöst, dass das Vorsteuerventil des Einlassventils und das Vorsteuerventil des Auslassventils in Längsrichtung mit paralleler Ausrichtung ihrer Betätigungsachsen zu der Teilungsebene weitgehend mittig über den Membranen des Einlassventils und des Auslassventils in dem Gehäusedeckel angeordnet sind, und dass der Gehäusedeckel aus einem zentral angeordneten, die Magnetspulen der Vorsteuerventile enthaltenden Magnetmodul sowie aus zwei in Längsrichtung jeweils stirnseitig an das Magnetmodul angrenzend angeordneten, jeweils Ventilbohrungen und Steuerkanäle der Vorsteuerventile aufweisenden und jeweils mit einem Steuerkammeroberteil des benachbarten Einlassventils oder Auslassventils versehenen Luftführungsmodulen besteht, die über ein einziges Verbindungselement sowohl miteinander als auch mit dem Basisgehäuse verbunden sind.

Vorteilhafte Ausgestaltungen und Weiterbildungen der erfindungsgemäßen Ventileinheit sind Gegenstand der Unteransprüche.

Die Erfindung geht demnach von einer an sich bekannten Ventileinheit zur Druckmodulation in einer Druckluft-Bremsanlage aus, die einen Bremsdruckeingang, einen Bremsdruckausgang, einen Entlüftungsausgang, ein als Membranventil ausgebildetes Einlassventil, ein als Membranventil ausgebildetes Auslassventil, und jeweils ein als 3/2-Wege-Magnetventil ausgebildetes Vorsteuerventil für jedes Membranventil aufweist. Die Drucklufteingänge und Druckluftausgänge sowie die Membran- und Magnetventile sind in einem länglichen Ventilgehäuse angeordnet, das mit einer in Einbaulage weitgehend horizontalen Teilungsebene in ein Basisgehäuse und einen Gehäusedeckel unterteilt ist. Der Bremsdruckeingang und der Bremsdruckausgang sind in Längsrichtung des Ventilgehäuses mit horizontaler Ausrichtung beispielsweise weitgehend axial gegenüberliegend und der Entlüftungsausgang beispielsweise dazwischen vertikal nach unten gerichtet in dem Basisgehäuse angeordnet. Die Membranventile sind in dem Basisgehäuse zwischen dem Bremsdruckeingang und dem Bremsdruckausgang mit parallelen Betätigungsachsen und einer Anordnung der Membranen in einer gemeinsamen, weitgehend der Teilungsebene entsprechenden Membranebene unter Einspannung zwischen dem Basisgehäuse und dem Gehäusedeckel in Längsrichtung hintereinander angeordnet. Die Vorsteuerventile sind dagegen in dem Gehäusedeckel angeordnet.

Gemäß der Erfindung sind das Vorsteuerventil des Einlassventils und das Vorsteuerventil des Auslassventils in Längsrichtung mit paralleler Ausrichtung ihrer Betätigungsachsen zu der Teilungsebene weitgehend mittig über den Membranen des Einlassventils und des Auslassventils in dem Gehäusedeckel angeordnet. Der Gehäusedeckel besteht aus einem zentral angeordneten Magnetmodul, welches die Magnetspulen der beiden Vorsteuerventile enthält, und aus zwei in Längsrichtung jeweils stirnseitig an das Magnetmodul angrenzend angeordneten Luftführungsmodulen, die jeweils Ventilbohrungen und Steuerkanäle der Vorsteuerventile aufweisen und jeweils mit einem Steuerkammeroberteil des benachbarten Einlassventils oder Auslassventils versehen sind. Das Magnetmodul und die beiden Luftführungsmodule werden erfindungsgemäß durch ein einziges Verbindungselement zusammengehalten, über das der aus diesen gebildete Gehäusedeckel auch mit dem Basisgehäuse verbunden ist.

Die Steuerkammeroberteile weisen jeweils eine die Steuerkammer des betreffenden Membranventils begrenzende Kammerinnenwand sowie einen die Membran des betreffenden Membranventils einspannenden Kammerrand auf.

Im montierten Zustand sind die mechanischen Bauteile der beiden Magnetventile, wie der jeweilige Ventilkern, der jeweilige Ventilanker und die jeweilige Ventilfeder, jeweils weitgehend mittig in die zugeordnete Magnetspule des Magnetmoduls sowie endseitig in die zugeordneten Ventilbohrungen der Luftführungsmodule eingesetzt.

Durch die in Einbaulage der Ventileinheit liegende, das heißt in Längsrichtung zu der Teilungsebene des Ventilgehäuses parallele Anordnung der Vorsteuerventile, ergibt sich eine sehr niedrige Bauhöhe des Ventildeckels und damit besonders kompakte Abmessungen der gesamten Ventileinheit. Dies ist besonders vorteilhaft, da derartige Ventileinheiten zur Erzielung einer kurzen Reaktionszeit der betreffenden Radbremsen bei der Steuerung der Blockierschutzfunktionen möglichst nahe an den zugeordneten Radbremszylindern angeordnet werden, und der dort verfügbare Bauraum üblicherweise gering ist. Durch die modulare Bauweise und die Verbindung der Module über das Verbindungselement sowohl miteinander als auch mit dem Basisgehäuse ist der Gehäusedeckel einfach montierbar und mit dem Basisgehäuse verbindbar. Zudem können die Module des Gehäusedeckels relativ einfach beispielsweise als Spritzgussteile hergestellt, problemlos entkernt und aufgrund der guten Zugänglichkeit, beispielsweise zur Herstellung der Ventilbohrungen und der Steuerkanäle an den Luftführungsmodulen sowie der Ränder an den Steuerkammeroberteilen, leicht mechanisch bearbeitet werden.

Zur Erzielung einer besonders kompakten Bauweise des Gehäusedeckels ist das Verbindungselement bevorzugt als eine ebene Befestigungsplatte ausgebildet, die parallel zu der Teilungsebene des Ventilgehäuses in entsprechende, jeweils zwischen den Ventilbohrungen und dem betreffenden Steuerkammeroberteil angeordneten Ausnehmungeri der Luftführungsmodule eingreift und mit einseitig offenen Querschlitzen jeweils mindestens einen rechtwinklig zu der Teilungsebene und zu der Längsrichtung des Ventilgehäuses verlaufenden Quersteg der Luftführungsmodule umfasst, und die Bohrungen zur Verschraubung des Gehäusedeckels mit dem Basisgehäuse aufweist.

Um weitere Bohrungen in der Befestigungsplatte und Dichtelemente zu deren Abdichtung gegenüber den Luftführungsmodulen zu vermeiden, sind die Steuerkanäle der Vorsteuerventile gemäß einer Weiterbildung der Erfindung in den Querstegen der Luftführungsmodule angeordnet.

Die Vorsteuerventile können als separate Magnetventile ausgebildet sein, die vorteilhaft mit entgegengesetzter Schaltrichtung und jeweils der Membran des zugeordneten Einlassventils oder Auslassventils zugewandtem Ventilsitz achsparallel und radial benachbart zueinander in dem Magnetmodul und den Luftführungsmodulen angeordnet sind. Durch diese Ausrichtung der Magnetventile ergeben sich für beide Vorsteuerventile besonders kleine, beim Umschalten zu belüftende oder zu entlüftende Pilotvolumina. Dies hat vorteilhaft besonders kurze Schaltreaktionszeiten der Membranventile beim Umschalten der Magnetventile zur Folge.

Die beiden erwähnten Ventilsitze können einstückig mit dem jeweils zugeordneten Luftführungsmodul verbunden sein beziehungsweise an diesen ausgebildet sein.

Zur Vereinfachung der Montage und zur Erzielung einer Funktionsverbesserung der Vorsteuerventile sind die mechanischen Bauteile der Magnetventile bevorzugt in jeweils einer Ventilpatrone zusammengefasst, wozu auch von den jeweiligen Luftführungsmodulen baulich separate Ventilsitze gehören können.

Alternativ zu der Nutzung einzelner Magnetventile können die Vorsteuerventile auch in einem Doppelankermagnetventil mit einer gemeinsamen Magnetspule zusammengefasst sein, in dem die einzelnen Magnetventile mit entgegengesetzter Schaltrichtung und jeweils der Membran des zugeordneten Einlassventils oder Auslassventils zugewandtem Ventilsitz koaxial sowie axial benachbart zueinander in dem Einlegeteil angeordnet sind.

Die Magnetspule des Doppelankermagnetventils kann mit einem niedrigen und einem hohen Strom bestrombar sein, wobei die Vorsteuerventile derart ausgebildet sind, dass das dem Einlassventil zugeordnete Magnetventil durch eine Bestromung der Magnetspule mit dem niedrigen Strom umgeschaltet wird, wogegen das dem Auslassventil zugeordnete Magnetventil erst durch eine Bestromung der Magnetspule mit dem hohen Strom umgeschaltet wird.

Alternativ dazu kann die Magnetspule des Doppelankermagnetventils einen Mittelabgriff zur Teilbestromung aufweisen, wobei die Vorsteuerventile derart ausgebildet sind, dass das dem Einlassventil zugeordnete Magnetventil durch eine Teilbestromung der Magnetspule umgeschaltet wird, wogegen das dem Auslassventil zugeordnete Magnetventil erst durch eine Vollbestromung der Magnetspule umgeschaltet wird.

Die vorgenannte Schaltcharakteristik des Doppelankermagnetventils wird weitgehend dadurch erreicht, dass für das dem Einlassventil zugeordnete Vorsteuerventil eine Ventilfeder mit entsprechend niedriger Federsteifigkeit und für das dem Auslassventil zugeordnete Vorsteuerventil eine Ventilfeder mit entsprechend hoher Federsteifigkeit genutzt wird.

Auch bei dieser Ausführungsvariante der Vorsteuerventile sind die mechanischen Bauteile des Doppelankermagnetventils zur Vereinfachung der Montage und zur Erzielung einer Funktionsverbesserung vorzugsweise in einer Ventilpatrone zusammengefasst, wobei die mechanischen Bauteile zumindest eines Magnetventils zur Ermöglichung ihrer Montage einen in Richtung ihres Ventilsitzes nicht ansteigenden Außendurchmesser aufweisen.

Bei beiden Ausführungsformen der Magnetventile können das Magnetmodul und eines der Luftführungsmodule zur Vereinfachung der Montage einstückig ausgebildet sein, wobei die mechanischen Bauteile zumindest desjenigen Magnetventils, dessen Ventilsitz in der Ventilbohrung des betreffenden Luftführungsmoduls angeordnet ist, zur Ermöglichung ihrer Montage einen in Richtung des Ventilsitzes nicht ansteigenden Außendurchmesser aufweisen.

Eine derartige Bauweise kann dadurch erreicht werden, dass das betreffende Magnetventil eine innenliegende Ventilfeder aufweist, die zwischen dem betreffenden Ventilanker und dem zugeordneten Ventilkern angeordnet ist.

Die Anschlusskabel der Magnetspulen sind vorzugsweise innerhalb des Magnetmoduls verlegt und enden vorteilhaft in Kontakten einer an das Magnetmodul angeformten Anschlussbuchse. Bei der üblichen Umspritzung der Magnetspulen mit einem Kunststoff sind die Anschlusskabel der Magnetspulen damit einerseits optimal gegen Beschädigungen geschützt. Andererseits besteht dadurch die Möglichkeit, die Anschlussbuchse der Magnetspulen entsprechend der Anforderung des jeweiligen Fahrzeugherstellers flexibel, also bedarfsweise mit unterschiedlicher Buchsenform und unterschiedlicher Ausrichtung, an verschiedenen Orten des Magnetmoduls anzuordnen.

Wenn dagegen eine Anordnung der Anschlussbuchse an einem der Luftführungsmodule vorgesehen ist, kann dies dadurch erreicht werden, dass Anschlusskabel der Magnetspulen innerhalb des Magnetmoduls verlegt sind, die über Steckverbindungen mit Anschlusskabeln verbunden sind, welche in einem der Luftführungsmodule angeordnet sind und in Kontakten einer an das betreffende Luftführungsmodul angeformten Anschlussbuchse enden.

Zur Vermeidung der Steckverbindungen kann dies alternativ auch dadurch erreicht werden, dass die Anschlusskabel der Magnetspulen innerhalb des Magnetmoduls verlegt sind und in Kontakten enden, die stirnseitig aus dem Magnetmodul herausragen sowie durch Öffnungen in einer an das betreffende Luftführungsmodul angeformten Anschlussbuchse hineinragen.

Zur weiteren Verdeutlichung der Erfindung ist der Beschreibung eine Zeichnung mit mehreren Ausführungsbeispielen beigefügt. In dieser zeigt
Fig. 1 eine erste Ausführungsform einer Ventileinheit gemäß der Erfindung in einem vertikalen Längsschnitt,
Fig. 2 die erste Ausführungsform der Ventileinheit gemäß Fig. 1 in einem ersten Horizontalschnitt,
Fig. 3 die erste Ausführungsform der Ventileinheit gemäß den Figuren 1 und 2 in einem zweiten Horizontalschnitt,
Fig. 4 ein Luftführungsmodul der ersten Ausführungsform der Ventileinheit gemäß den Figuren 1 bis 3 in einer perspektivischen Ansicht,
Fig. 5a einen ersten Teil von Verfahrensschritten zur Montage der ersten Ausführungsform der Ventileinheit gemäß den Figuren 1 bis 4 in schematischen Darstellungen,
Fig. 5b einen zweiten Teil von Verfahrensschritten zur Montage der ersten Ausführungsform der Ventileinheit gemäß den Figuren 1 bis 4 in schematischen Darstellungen,
Fig. 6 eine zweite Ausführungsform der Ventileinheit in einem vertikalen Längsschnitt,
Fig. 7 die zweite Ausführungsform der Ventileinheit gemäß Fig. 6 in einem Horizontalschnitt,
Fig. 8 eine dritte Ausführungsform der Ventileinheit in einem vertikalen Längsschnitt,
Fig. 9 die dritte Ausführungsform der Ventileinheit gemäß Fig. 8 in einem Horizontalschnitt,
Fig. 10 eine erste Ausführungsvariante einer Anschlussbuchse für Magnetspulen in einem teilweisen Längsschnitt,
Fig. 11 eine zweite Ausführungsvariante einer Anschlussbuchse für Magnetspulen in einem teilweisen Längsschnitt, und
Fig. 12 eine Ausführungsvariante einer Anschlussbuchse für Magnetspulen in einem teilweisen Längsschnitt.

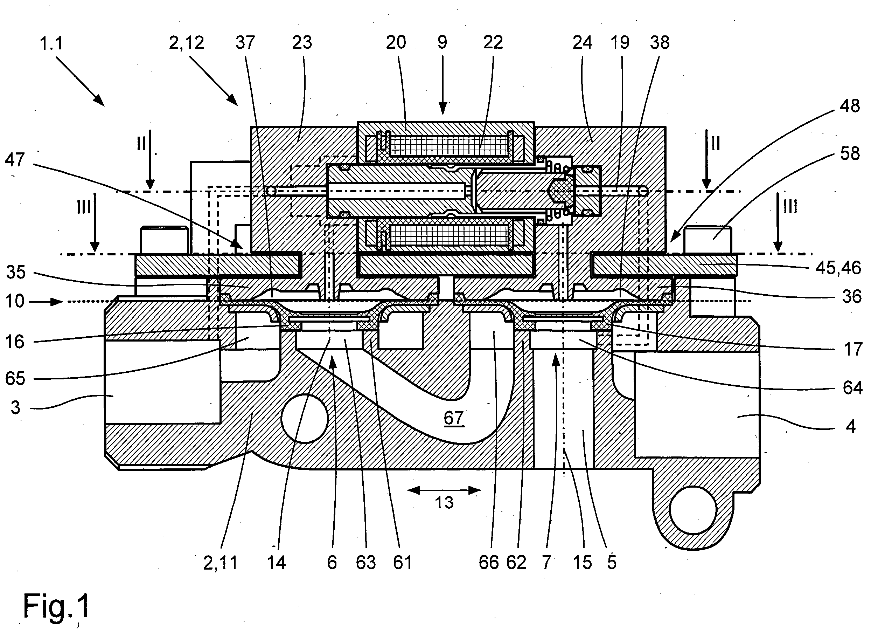

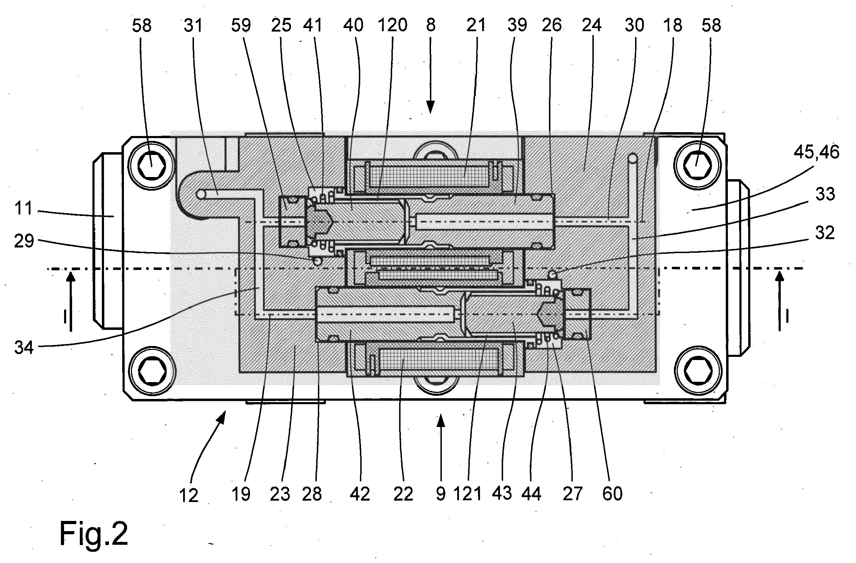

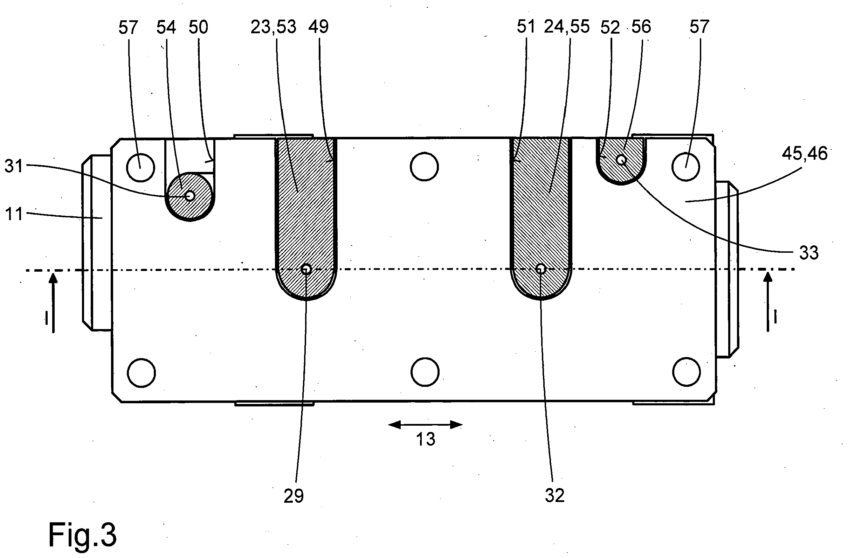

Eine erste Ausführungsform einer erfindungsgemäßen Ventileinheit 1.1 ist in
Fig. 1 in einem vertikalen Längsschnitt I - I gemäß den Figuren 2 und 3, in Fig. 2 in einem ersten Horizontalschnitt II - II gemäß Fig. 1, und in Fig. 3 in einem zweiten Horizontalschnitt III - III gemäß Fig. 1 abgebildet.

In einem länglichen Ventilgehäuse 2 sind ein Bremsdruckeingang 3, ein Bremsdruckausgang 4, ein Entlüftungsausgang 5, ein als Membranventil ausgebildetes Einlassventil 6, ein als Membranventil ausgebildetes Auslassventil 7, und jeweils ein als 3/2-Wege-Magnetventil ausgebildetes Vorsteuerventil 8, 9 für jedes Membranventil 6, 7 angeordnet. Das Ventilgehäuse 2 ist mit einer in Einbaulage weitgehend horizontalen Teilungsebene 10 in ein Basisgehäuse 11 und einen Gehäusedeckel 12 unterteilt. Der Bremsdruckeingang 3 und der Bremsdruckausgang 4 sind in diesem Ausführungsbeispiel in Längsrichtung 13 des Ventilgehäuses 2 mit horizontaler Ausrichtung weitgehend axial gegenüberliegend und der Entlüftungsausgang 5 dazwischen vertikal nach unten gerichtet in dem Basisgehäuse 11 angeordnet. Die beiden Membranventile 6, 7 sind in dem Basisgehäuse 11 zwischen dem Bremsdruckeingang 3 sowie dem Bremsdruckausgang 4 mit parallelen Betätigungsachsen 14, 15 und einer Anordnung der Membranen 16, 17 in einer gemeinsamen, weitgehend der Teilungsebene 10 entsprechenden Membranebene unter Einspannung zwischen dem Basisgehäuse 11 und dem Gehäusedeckel 12 in Längsrichtung 13 hintereinander angeordnet. Die beiden Vorsteuerventile 8, 9 sind dagegen in dem Gehäusedeckel 12 angeordnet.

Erfindungsgemäß sind das Vorsteuerventil 8 des Einlassventils 6 und das Vorsteuerventil 9 des Auslassventils 7 in Längsrichtung 13 mit paralleler Ausrichtung ihrer Betätigungsachsen 18, 19 zu der Teilungsebene 10 weitgehend mittig über den Membranen 16, 17 des Einlassventils 6 und des Auslassventils 7 in dem Gehäusedeckel 12 angeordnet. Wie insbesondere Fig. 2 veranschaulicht, besteht der Gehäusedeckel 12 aus einem zentral angeordneten, die Magnetspulen 21, 22 der Vorsteuerventile 8, 9 enthaltenden Magnetmodul 20 und aus zwei in Längsrichtung 13 jeweils stirnseitig an das Magnetmodul 20 angrenzend angeordneten Luftführungsmodulen 23, 24. Die Luftführungsmodule 23, 24 weisen jeweils Ventilbohrungen 25, 26; 27, 28 sowie Steuerkanäle 29, 30, 31; 32, 33, 34 der Vorsteuerventile 8, 9 auf, und sind jeweils mit einem Steuerkammeroberteil 35, 36 des benachbarten Einlass- oder Auslassventils 6, 7 versehenen. Die beiden Steuerkammeroberteile 35, 36 greifen jeweils in eine die Membran 16, 17 des betreffenden Membranventils 6, 7 enthaltende Öffnung des Basisgehäuses 11 ein. Dabei spannen die beiden Steuerkammeroberteile 35, 36 mit ihren Rändern die jeweilige Membran 16, 17 ein, und begrenzen mit ihrer dem Basisgehäuse 11 zugewandten Außenwand die jeweilige Steuerkammer 37, 38 des betreffenden Membranventils 6, 7.

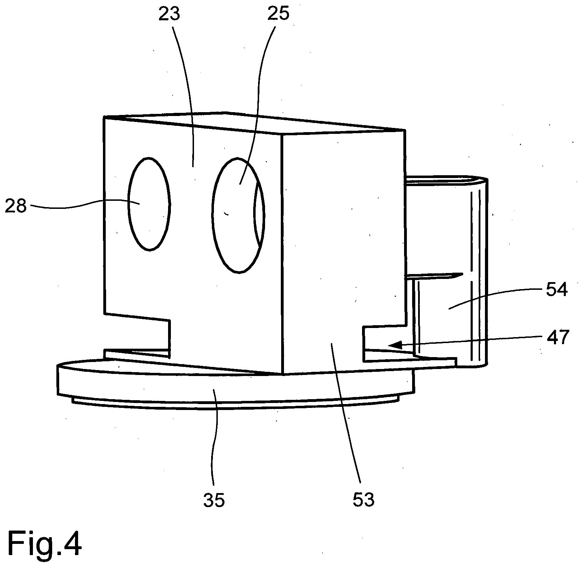

In die Magnetspulen 21, 22 des Magnetmoduls 20 und in die Ventilbohrungen 25, 26; 27, 28 der Luftführungsmodule 23, 24 sind die mechanischen Bauteile, wie der jeweilige Ventilkern 39, 42, der jeweilige Ventilanker 40, 43, der jeweilige Ventilsitz 59, 60 und die jeweilige Ventilfeder 41, 44, eingesetzt. Die beiden Ventilsitze 59, 60 können auch einstückig mit dem jeweiligen Luftführungsmodul 23, 24 verbunden sein. Das Magnetmodul 20 und die Luftführungsmodule 23, 24 sind über ein einziges Verbindungselement 45 sowohl miteinander als auch mit dem Basisgehäuse 11 verbunden. Zur Veranschaulichung der Geometrie der Luftführungsmodule 23, 24 ist das über dem Einlassventil 6 angeordnete eingangsseitige Luftführungsmodul 23 in Fig. 4 in einer perspektivischen Ansicht dargestellt.

Wie insbesondere Fig. 3 zeigt, ist das Verbindungselement 45 bevorzugt als eine ebene Befestigungsplatte 46 ausgebildet, die parallel und mit Abstand zu der Teilungsebene 10 des Ventilgehäuses 2 in entsprechende, jeweils zwischen den Ventilbohrungen 25, 26; 27, 28 sowie dem betreffenden Steuerkammeroberteil 35, 36 angeordneten Ausnehmungen 47, 48 der Luftführungsmodule 23, 24 eingreift. Dabei umfasst die Befestigungsplatte 46 mit einseitig offenen Querschlitzen 49, 50; 51, 52 jeweils rechtwinklig zu der Teilungsebene 10 ausgebildete und rechtwinklig zu der Längsrichtung 13 des Ventilgehäuses 2 verlaufende Querstege 53, 54; 55, 56 der Luftführungsmodule 23, 24.

Zudem ist die Befestigungsplatte 46 mit vorliegend beispielhaft sechs Bohrungen 57 versehen, über welche die Befestigungsplatte 46 und damit der gesamte Gehäusedeckel 12 mittels sechs Schrauben 58 mit dem Basisgehäuse 11 verschraubt ist. Zur Vermeidung weiterer Bohrungen in der Befestigungsplatte 46 und von Dichtelementen zu deren Abdichtung sind die Steuerkanäle 29, 31; 32, 34 der Vorsteuerventile 8, 9 innerhalb der Querstege 53, 54; 55, 56 der Luftführungsmodule 23, 24 angeordnet.

Vorliegend sind die beiden Vorsteuerventile 8, 9 als separate Magnetventile ausgebildet, die mit entgegengesetzter Schaltrichtung und jeweils der Membran 16, 17 des zugeordneten Einlass- oder Auslassventils 6, 7 zugewandtem Ventilsitz 59, 60 achsparallel und radial benachbart zueinander in dem Magnetmodul 20 und den Luftführungsmodulen 23, 24 angeordnet sind.

Die Membran 16 des Einlassventils 6 und die Membran 17 des Auslassventils 7 liegen aufgrund ihrer Formgebung jeweils an einem Ventilsitz 61, 62 eines zylindrischen Zentralkanals 63, 64 an, der jeweils durch die Beaufschlagung der zwischen der betreffenden Membran 16, 17 und dem zugeordneten Steuerkammeroberteil 35, 36 angeordneten Steuerkammer 37, 38 mit einem niedrigen oder hohen Steuerdruck mit einem koaxial zu diesem angeordneten zylindrischen Ringkanal 65, 66 verbindbar oder gegenüber diesem absperrbar ist. Der zylindrische Ringkanal 65 des Einlassventils 6 ist mit dem Bremsdruckeingang 3 verbunden.

Der Zentralkanal 63 des Einlassventils 6 steht über einen Verbindungskanal 67 mit dem zylindrischen Ringkanal 66 des Auslassventils 7 in Verbindung, welcher wiederum mit dem Bremsdruckausgang 4 verbunden ist. Der Zentralkanal 64 des Auslassventils 7 ist mit dem Entlüftungsausgang 5 verbunden. Somit ist der Bremsdruckausgang 4 über das Einlassventil 6 wechselweise mit dem Bremsdruckeingang 3 verbindbar oder gegenüber diesem absperrbar. Ebenso ist der Bremsdruckausgang 4 über das Auslassventil 7 wechselweise mit dem Entlüftungsausgang 5 verbindbar oder gegenüber diesem absperrbar.

Die Ventileinheit 1.1 weist die Schaltfunktionen "Druckaufbau", "Druckhalten" und "Druckabbau" auf. In der Schaltfunktion "Druckaufbau" der Ventileinheit 1.1 ist das Einlassventil 6 geöffnet und das Auslassventil 7 geschlossen, so dass der über ein Bremsventil am Bremsdruckeingang 3 eingespeiste Bremsdruck unverändert an den Bremsdruckausgang 4 und an mindestens einen daran angeschlossenen Radbremszylinder weitergeleitet wird. Da die Schaltfunktion "Druckaufbau" dem Ruhezustand der Ventileinheit 1.1 entspricht, verbindet das Vorsteuerventil 8 des Einlassventils 6 im unbestromten Zustand seiner Magnetspule 21 die Steuerkammer 37 des Einlassventils 6 über den Steuerkanal 29, die Ventilbohrung 26, Längsnuten 120 in dem Ventilanker 40, und eine Zentralbohrung in dem Ventilkern 39 mit einem einen niedrigen Steuerdruck führenden Steuerkanal 30, der über eine weiteren Steuerkanal 33 an den Entlüftungsausgang 5 angeschlossen ist. Die in Fig. 1 aufgrund ihrer Formgebung an dem Ventilsitz 61 des Einlassventils 6 anliegend dargestellte Membran 16 wird in diesem Fall durch einen in dem Ringkanal 65 vorliegenden Bremsdruck in Richtung der Steuerkammer 37 verschoben, wodurch das Einlassventil 6 geöffnet wird.

Ebenso verbindet das Vorsteuerventil 9 des Auslassventils 7 im unbestromten Zustand seiner Magnetspule 22 die Steuerkammer 38 des Auslassventils 7 über den Steuerkanal 32, die Ventilbohrung 28, Längsnuten 121 in dem Ventilanker 43, und eine Zentralbohrung in dem Ventilkern 42 mit einem einen hohen Steuerdruck führenden Steuerkanal 34, der über einen weiteren Steuerkanal 31 an den Bremsdruckeingang 3 angeschlossen ist.

In der Schaltfunktion "Druckhalten" der Ventileinheit 1.1 sind das Einlassventil 6 und das Auslassventil 7 geschlossen, so dass der am Bremsdruckausgang 4 und dem mindestens einen daran angeschlossenen Radbremszylinder anliegende Bremsdruck dann konstant gehalten wird. Zur Einstellung dieser Schaltfunktion "Druckhalten" wird nur das Vorsteuerventil 8 des Einlassventils 6 durch Bestromung seiner Magnetspule 21 umgeschaltet, wodurch der betreffende Ventilanker 40 entgegen der Rückstellkraft der Ventilfeder 41 axial von dem Ventilsitz 59 nach innen gezogen wird. Dadurch wird die Steuerkammer 37 des Einlassventils 6 über den Steuerkanal 29 und die Ventilbohrung 25 mit dem den hohen Steuerdruck führenden Steuerkanal 31 verbunden, der an den Bremsdruckeingang 3 angeschlossen ist.

In der Schaltfunktion "Druckabbau" der Ventileinheit 1.1 sind das Einlassventil 6 geschlossen und das Auslassventil 7 geöffnet, so dass der Bremsdruckausgang 4 und der mindestens eine daran angeschlossene Radbremszylinder dann über den Entlüftungsausgang 5 entlüftet werden. Zur Einstellung dieser Schaltfunktion werden beide Vorsteuerventile 8, 9 durch Bestromung ihrer Magnetspulen 21, 22 umgeschaltet. Durch die Bestromung der Magnetspule 22 des dem Auslassventil 7 zugeordneten Vorsteuerventils 9 wird der betreffende Ventilanker 43 entgegen der Rückstellkraft der Ventilfeder 44 axial von dem Ventilsitz 60 nach innen gezogen, wodurch die Steuerkammer 38 des Auslassventils 7 über den Steuerkanal 32 und die Ventilbohrung 27 mit dem den niedrigen Steuerdruck führenden Steuerkanal 33 verbunden wird, der an den Entlüftungsausgang 5 angeschlossen ist.

Die Schaltfunktionen "Druckhalten" und "Druckabbau" der Ventileinheit 1.1 sind Blockierschutzfunktionen, mit denen ein bremsbedingtes Blockieren des mindestens einen zugeordneten Fahrzeugrades vermieden werden soll. Diese Schaltfunktionen werden durch eine entsprechende Ansteuerung der Vorsteuerventile 8, 9 von einem Steuergerät des Antiblockiersystems gesteuert, in dem die Signale von Raddrehzahlsensoren zur Erkennung eines bevorstehenden oder schon eingetretenen Blockierens der gebremsten Räder ausgewertet werden.

Durch die in Einbaulage der Ventileinheit 1.1 liegende, also in Längsrichtung 13 zu der Teilungsebene 10 des Ventilgehäuses 2 parallele Anordnung der beiden Vorsteuerventile 8, 9 ergibt sich eine sehr niedrige Bauhöhe des Ventildeckels 12 und damit besonders kompakte Abmessungen der gesamten Ventileinheit 1.1. Dies ist besonders vorteilhaft, da derartige Ventileinheiten 1.1 zur Erzielung einer kurzen Reaktionszeit der betreffenden Radbremsen bei der Steuerung der Blockierschutzfunktionen möglichst nahe an den zugeordneten Radbremszylindern angeordnet werden, und der dort verfügbare Bauraum üblicherweise gering ist.

Durch die Ausrichtung der beiden Magnetventile 8, 9 mit benachbart zu den beiden Membranen 16, 17 beziehungsweise den beiden Steuerkammern 37, 38 der zugeordneten Membranventile 6, 7 angeordneten Ventilsitzen 59, 60 ergeben sich für beide Vorsteuerventile 8, 9 besonders kleine, beim Umschalten zu belüftende oder zu entlüftende Pilotvolumina. Dies hat vorteilhaft besonders kurze Schaltreaktionszeiten der Membranventile 6, 7 beim Umschalten der Magnetventile 8, 9 zur Folge.

Durch die modulare Bauweise und die Verbindung des Magnetmoduls 20 und der beiden Luftführungsmodule 23, 24 über die Befestigungsplatte 46 sowohl miteinander als auch mit dem Basisgehäuse 11 ist der Gehäusedeckel 12 einfach montierbar und leicht mit dem Basisgehäuse 11 verbindbar. Zudem können die genannten Module 20, 23, 24 des Gehäusedeckels 12 relativ einfach, beispielsweise als Spritzgussteile hergestellt, problemlos entkernt, und aufgrund der guten Zugänglichkeit, zum Beispiel zur Herstellung der Ventilbohrungen 25 - 28 und der Steuerkanäle 29 - 34 an den Luftführungsmodulen 23, 24 sowie der Ränder an den Steuerkammeroberteilen 35, 36, leicht mechanisch bearbeitet werden.

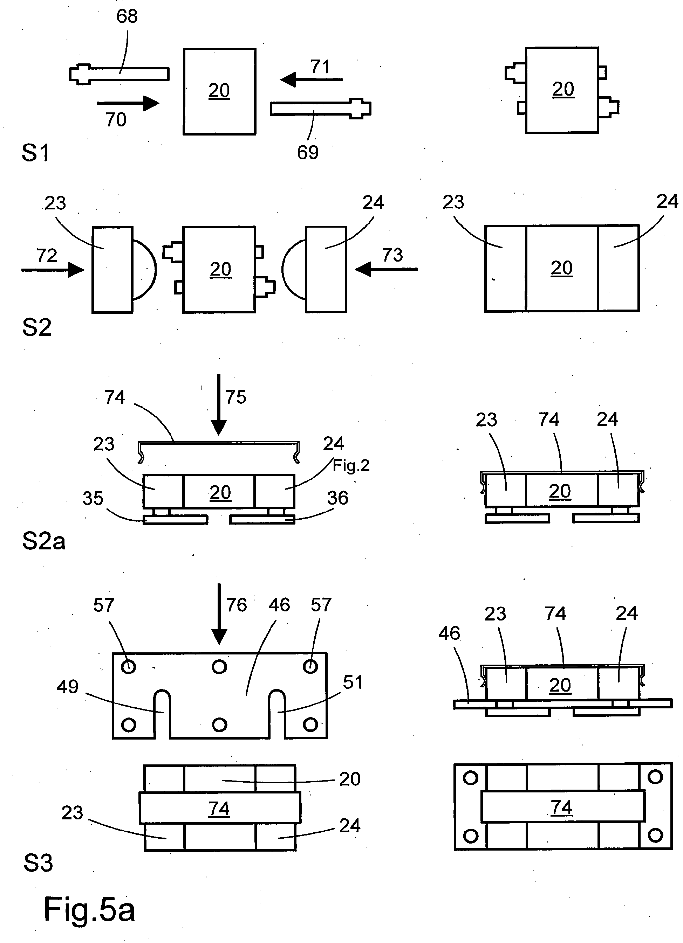

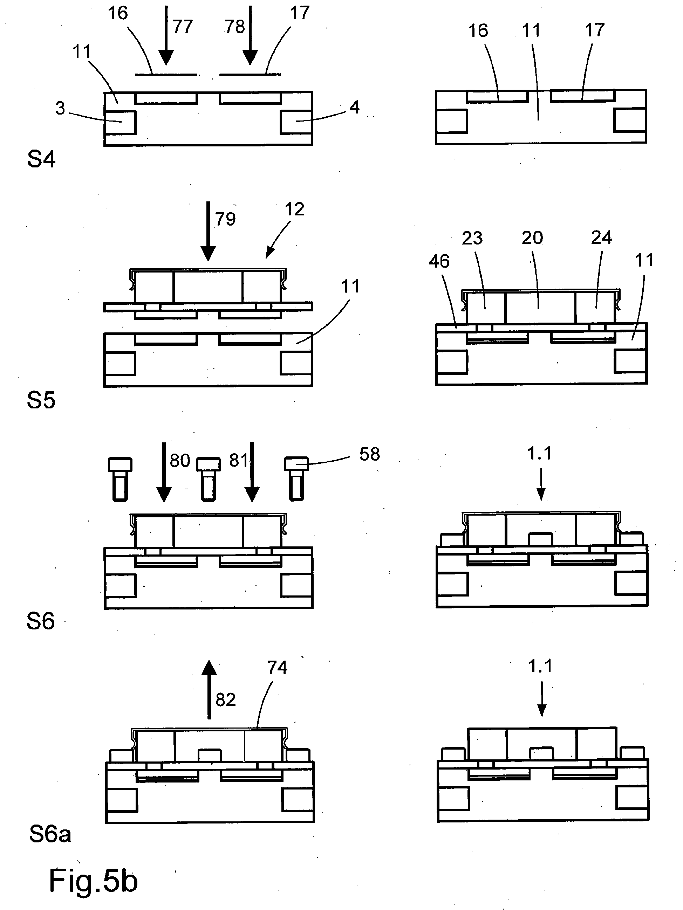

In den Figuren 5a und 5b ist nun beispielhaft anhand der ersten Ausführungsform der Ventileinheit 1.1 gemäß den Figuren 1 bis 4 die Montage einer derartigen Ventileinheit schematisch dargestellt. Dabei ist in den Figuren 5a und 5b jeweils links der Vorgang des jeweiligen Montageschritts und rechts das Ergebnis des betreffenden Montageschritts abgebildet.

Beim Montageschritt S1 werden zunächst die vorzugsweise jeweils in einer Ventilpatrone 68, 69 zusammengefassten mechanischen Bauteile 39, 40, 41, 59; 42,43, 44, 60 der Vorsteuerventile 8, 9 entsprechend den Montagepfeilen 70, 71 in das die Magnetspulen 21, 22 enthaltende Magnetmodul 20 eingesetzt.

Beim Montageschritt S2 werden die beiden Luftführungsmodule 23, 24 entsprechend den Montagepfeilen 72, 73 unter Eingriff der Ventilpatronen 68, 69 in die Ventilbohrungen 25, 26; 27, 28 stirnseitig an das Magnetmodul 20 aufgesteckt.

Beim dem optionalen Zwischenschritt S2a werden das Magnetmodul 20 und die Luftführungsmodule 23, 24 zur Montageerleichterung durch Aufstecken einer die Luftführungsmodule 23, 24 stirnseitig umfassenden Montageklammer 74 entsprechend dem Montagepfeil 75 miteinander fixiert. Erkennbar ist an den beiden Luftführungsmodulen 23, 24 montageklammerfern jeweils ein Steuerkammeroberteil 35, 36 ausgebildet.

Beim Montageschritt S3 wird die Befestigungsplatte 46 entsprechend dem Montagepfeil 76 seitlich in die Ausnehmungen 47, 48 der Luftführungsmodule 23, 24 eingeschoben, wobei die Querstege 53, 55 der Luftführungsmodule 23, 24 beidseitig von den einseitig offenen Querschlitzen 49, 51 der Befestigungsplatte 46 umfasst werden. Hierdurch sind das Magnetmodul 20 und die Luftführungsmodule 23, 24 in Längsrichtung 13 formschlüssig zueinander fixiert.

Beim Montageschritt S4 werden zunächst die beiden Membranen 16, 17 des Einlassventils 6 beziehungsweise des Auslassventils 7 entsprechend den Montagepfeilen 77, 78 in die entsprechenden Öffnungen des Basisgehäuses 11 eingesetzt, bevor in Montageschritt S5 der aus dem Magnetmodul 20 und den Luftführungsmodulen 23, 24 bestehende Gehäusedeckel 12 entsprechend dem Montagepfeil 79 unter Eingriff der Steuerkammeroberteile 35, 36 in die zugeordneten Öffnungen der Membranventile 6, 7 auf das Basisgehäuse 11 aufgesetzt wird.

Danach wird in dem Montageschritt S6 die Befestigungsplatte 46 über mehrere durch Bohrungen 57 geführte Schrauben 58 entsprechend den Montagepfeilen 80, 81 mit dem Basisgehäuse 11 verschraubt, wodurch die genanten Module 20, 23, 24 des Gehäusedeckels 12 form- und kraftschlüssig miteinander und mit dem Basisgehäuse 11 verbunden sind.

Beim dem optionalen Zusatzschritt S6a wird schließlich die Montageklammer 74 entsprechend dem Montagepfeil 82 wieder von dem Gehäusedeckel 12 abgezogen und von der Ventileinheit 1.1 entfernt.

Aus der Beschreibung ist ersichtlich, dass die Montage der Ventileinheit 1.1 aufgrund des modularen Aufbaus des Gehäusedeckels 12 vergleichsweise einfach und schnell durchführbar ist.

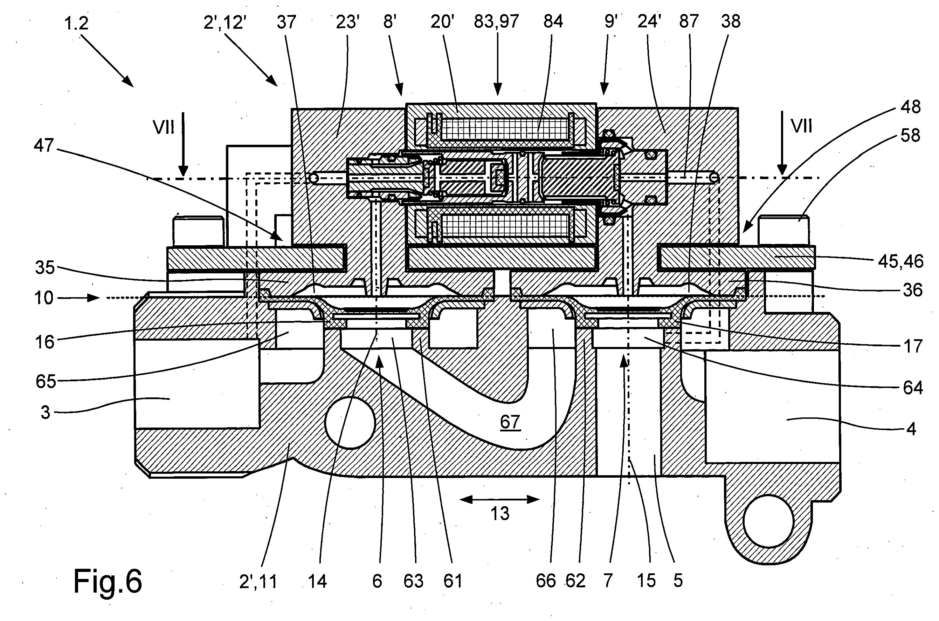

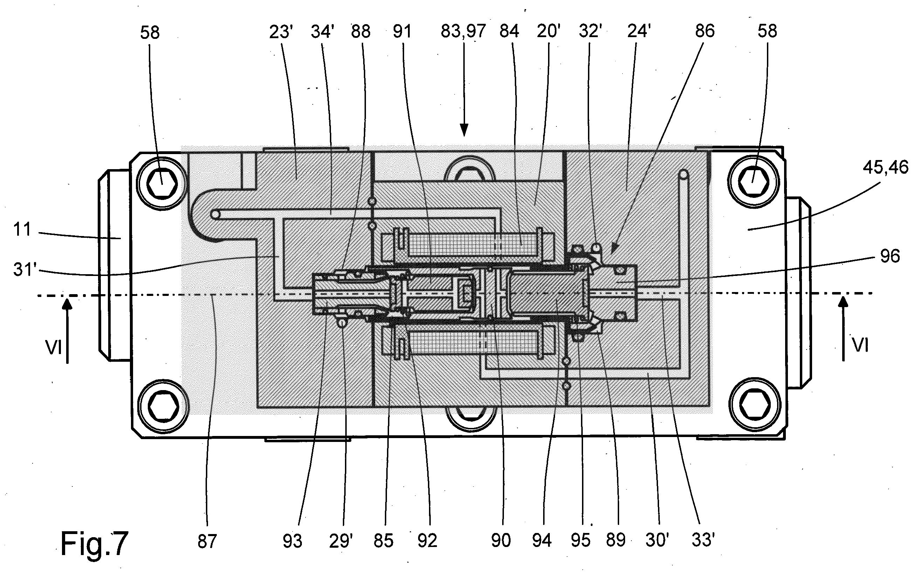

Eine in Fig. 6 in einem Längsmittelschnitt VI - VI gemäß Fig. 7 und in Fig. 7 in einem Horizontalschnitt VII - VII gemäß Fig. 6 abgebildete zweite Ausführungsform einer erfindungsgemäß ausgebildeten Ventileinheit 1.2 unterscheidet sich bei gleicher Funktionsweise von der ersten Ausführungsform der erfindungsgemäßen Ventileinheit 1.1 nach den Figuren 1 bis 4 dadurch, dass die Vorsteuerventile 8', 9' nun in einem Doppelankermagnetventil 83 mit einer gemeinsamen Magnetspule 84 baulich zusammengefasst sind. Innerhalb des Doppelankermagnetventils 83 sind die einzelnen Magnetventile 8', 9' mit entgegengesetzter Schaltrichtung und jeweils der Membran 16, 17 des zugeordneten Einlass- oder Auslassventils 6, 7 zugewandtem Ventilsitz 85, 86 koaxial und axial benachbart zueinander in dem Magnetmodul 20' und den Luftführungsmodulen 23', 24' angeordnet.

In der Schaltfunktion "Druckaufbau" der Ventileinheit 1.2, in der das Einlassventil 6 geöffnet und das Auslassventil 7 geschlossen ist, verbindet das Vorsteuerventil 8' des Einlassventils 6 im unbestromten Zustand der Magnetspule 84 die Steuerkammer 37 des Einlassventils 6 über einen Steuerkanal 29', die Ventilbohrung 88, in einem äußeren Ventilkern 93 angeordnete Längsnuten, in dem zugeordneten Ventilanker 91 angeordnete Radial- und Zentralbohrungen, und in einem zentralen Ventilkern 90 angeordnete Radial- und Zentralbohrungen mit einem einen niedrigen Steuerdruck führenden Steuerkanal 30', der an den Entlüftungsausgang 5 angeschlossen ist. Ebenso verbindet das Vorsteuerventil 9' des Auslassventils 7 im unbestromten Zustand der Magnetspule 84 die Steuerkammer 38 des Auslassventils 7 über einen Steuerkanal 32', die Ventilbohrung 89, in einem äußeren Ventilkern 96 angeordnete Diagonalbohrungen, in dem zugeordneten Ventilanker 94 angeordnete Längsnuten, und in dem zentralen Ventilkern 90 angeordnete Radial- und Zentralbohrungen mit einem einen hohen Steuerdruck führenden Steuerkanal 34', der an den Bremsdruckeingang 3 angeschlossen ist.

In der Schaltfunktion "Druckhalten" der Ventileinheit 1.2, in der das Einlassventil 6 und das Auslassventil 7 geschlossen sind, wird nur das Vorsteuerventil 8' des Einlassventils 6 durch die Bestromung der Magnetspule 84 mit einem geringen Strom oder, bei vorhandenem Mittelabgriff an der Magnetspule 84, durch eine Teilbestromung der Magnetspule 84 umgeschaltet. Dabei wird der Ventilanker 91 des Vorsteuerventils 8' entgegen der Rückstellkraft der betreffenden Ventilfeder 92 axial von dem Ventilsitz 85 nach innen gezogen. Dadurch wird die Steuerkammer 37 des Einlassventils 6 über den Steuerkanal 29', die Veritilbohrung 88 sowie die in dem äußeren Ventilkern 93 angeordneten Längsnuten und eine Zentralbohrung mit einem den hohen Steuerdruck führenden Steuerkanal 31' verbunden, der über den Steuerkanal 34' des Vorsteuerventils 9' an den Bremsdruckeingang 3 angeschlossen ist.

In der Schaltfunktion "Druckabbau" der Ventileinheit 1.2, in dem das Einlassventil 6 geschlossen und das Auslassventil 7 geöffnet ist, werden beide Vorsteuerventile 8', 9' durch die Bestromung der Magnetspule 84 mit einem hohen Strom oder, bei vorhandenem Mittelabgriff an der Magnetspule 84, durch eine Vollbestromung der Magnetspule 84 umgeschaltet. Beim Umschalten des dem Auslassventil 7 zugeordneten Vorsteuerventils 9' wird der zugeordnete Ventilanker 94 entgegen der Rückstellkraft der betreffenden Ventilfeder 95 axial von dem Ventilsitz 86 nach innen gezogen. Dadurch wird die Steuerkammer 38 des Auslassventils 7 über den Steuerkanal 32', die Ventilbohrung 89, sowie die in dem äußeren Ventilkern 96 angeordneten Diagonalbohrungen und eine Zentralbohrung mit einem den niedrigen Steuerdruck führenden Steuerkanal 33' verbunden, der über den Steuerkanal 30' des Vorsteuerventils 8' an den Entlüftungsausgang 5 angeschlossen ist.

Die stufenweise Betätigung der Vorsteuerventile 8', 9' wird durch eine entsprechend niedrige Federsteifigkeit der Ventilfeder 92 des dem Einlassventil 6 zugeordneten Vorsteuerventils 8' und eine entsprechend hohe Federsteifigkeit der Ventilfeder 95 des dem Auslassventil 7 zugeordneten Vorsteuerventils 9' erreicht. Zur Montageerleichterung und Funktionsverbesserung der Vorsteuerventile 8', 9' sind die mechanischen Bauteile des Doppelankermagnetventils 83, wie der zentrale Ventilkern 90, die Ventilanker 91, 94, die Ventilfedern 92, 95, die Ventilsitze und die äußeren Ventilkerne 93, 96 vorliegend beispielhaft in einer Ventilpatrone 97 zusammengefasst, die in die Magnetspule 84 des Magnetmoduls 20' und endseitig in die jeweilige Ventilbohrung 88, 89 der Luftführungsmodule 23', 24' eingesetzt ist.

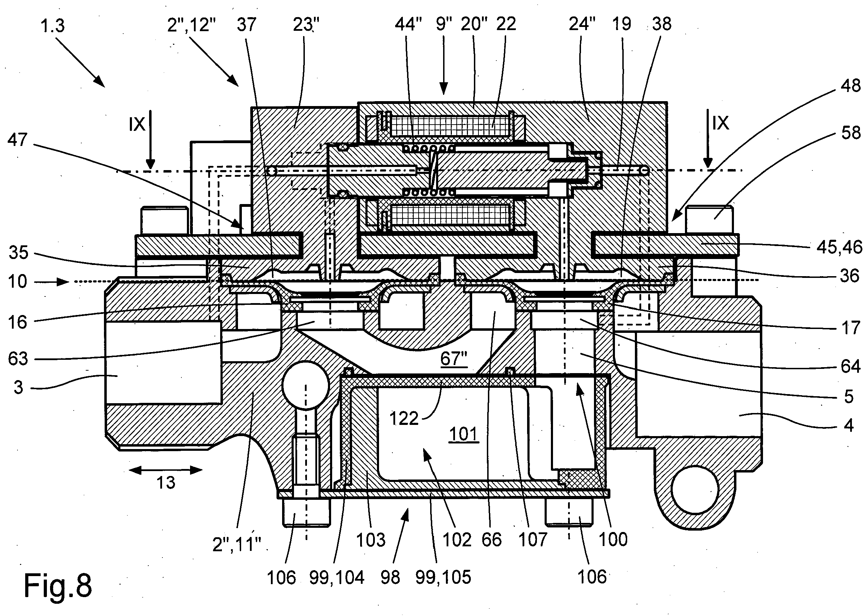

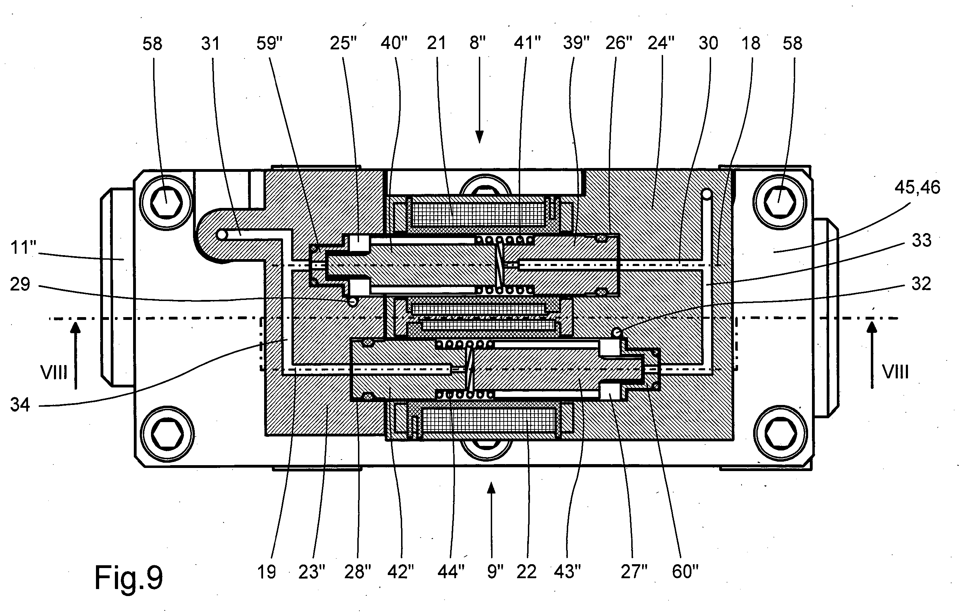

Eine in Fig. 8 in einem vertikalen Längsschnitt VIII - VIII gemäß Fig. 9 und in
Fig. 9 in einem Horizontalschnitt IX - IX gemäß Fig. 8 abgebildete dritte Ausführungsform einer gemäß der Erfindung ausgebildeten Ventileinheit 1.3 unterscheidet sich bei gleicher Funktionsweise von der Ventileinheit 1.1 gemäß den Figuren 1 bis 4 dadurch, dass das Magnetmodul 20" und das ausgangsseitige Luftführungsmodul 24" nun einstückig ausgebildet, also baulich in einem gemeinsamen Bauteil zusammengefasst sind. Um hierbei die Montage der mechanischen Bauteile 39"- 41"; 42" - 44" insbesondere des dem Auslassventil 7 zugeordneten Vorsteuerventils 9" zu ermöglichen, weisen die beiden Magnetventiie 8", 9" einen in Richtung ihres Ventilsitzes 59", 60" nicht ansteigenden Außendurchmesser auf. Dies ist vorliegend dadurch erreicht, dass die beiden Magnetventile 8", 9" jeweils eine innenliegende Ventilfeder 41", 44" aufweisen, die zwischen dem betreffenden Ventilanker 40", 43" und dem zugeordneten Ventilkern 39", 42" angeordnet ist.

Des Weiteren ist die Ventileinheit 1.3 gemäß den Figuren 8 und 9 beispielhaft mit einem an dem Entlüftungsausgang 5 angeordneten Schalldämpfer 98 versehen. Der Schalldämpfer 98 weist ein weitgehend zylindrisches Schalldämpfergehäuse 99 mit einer Eintrittsöffnung 100, einer innenliegenden Beruhigungskammer 101, und einer in Fig. 8 nicht erkennbare Austrittsöffnung 102 auf. Der Austrittsöffnung 102, die sich in der Zylinderwand des Schalldämpfergehäuses 99 mit einer Ausrichtung zu dem Bremsdruckeingang 3 hin über einen Winkelbereich von etwa 270° erstreckt, ist innerhalb des Schalldämpfergehäuses 99 eine Schalldämpfungseinlage 103 aus einer luftdurchlässigen und schalldämpfenden Materialanordnung vorgelagert. Das Schalldämpfergehäuse 99 besteht aus einem topfzylindrischen Grundgehäuse 104 sowie einem ebenen Gehäusedeckel 105, und es ist in eine Ausnehmung des Basisgehäuses 11" zwischen dem Bremsdruckeingang 3 und dem Bremsdruckausgang 4 eingesetzt. Über eine mehrere Schrauben 106 umfassende Verschraubung des Gehäusedeckels 105 mit dem Basisgehäuse 11" ist der Schalldämpfer 98 an dem Ventilgehäuse 2" befestigt.

Durch den der Teilungsebene 10 des Ventilgehäuses 2" zugewandten Gehäuseboden 122 des Grundgehäuses 104 ist auch ein vorliegend nach außen offener Verbindungskanal 67" verschlossen, über den der Zentralkanal 63 des Einlassventils 6 mit dem Ringkanal 66 des Auslassventils 7 in Verbindung steht. Zur Abdichtung des Verbindungskanals 67" sind zwischen benachbarten Gehäusewänden des Basisgehäuses 11" und dem Gehäuseboden 122 des Grundgehäuses 104 Dichtelemente 107 angeordnet.

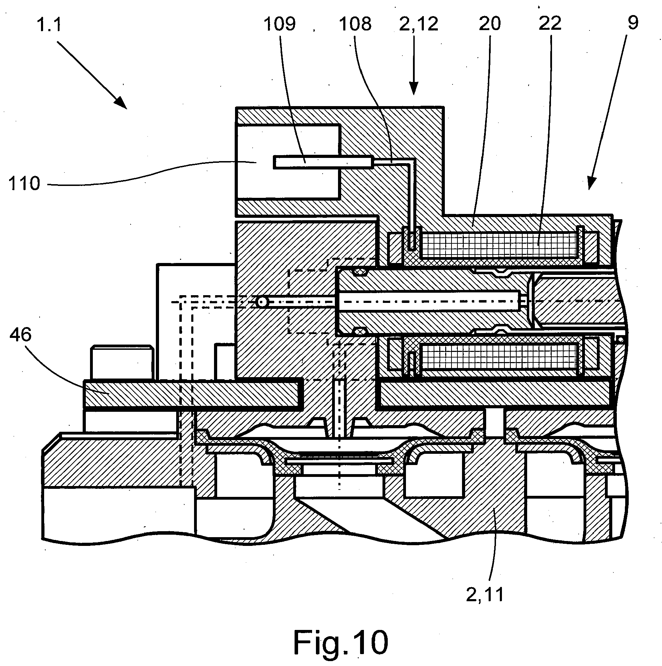

In einem teilweisen Längsschnitt einer Ventileinheit 1.1 nach Fig. 10, der beispielhaft der Schnittansicht von Fig. 1 entnommen wurde, ist eine erste Ausführungsform einer Anschlussbuchse 110 zum Anschluss der Magnetspulen 21, 22 der Magnetventile 8, 9 an eine Spannungsquelle abgebildet. Bei dieser Ausführungsvariante ist die Anschlussbuchse 110 einstückig an das Magnetmodul 20 angeformt. Die Anschlusskabel 108 der Magnetspulen 21, 22 sind vollständig innerhalb des Magnetmoduls 20 verlegt und enden in Kontakten 109 der Anschlussbuchse 110.

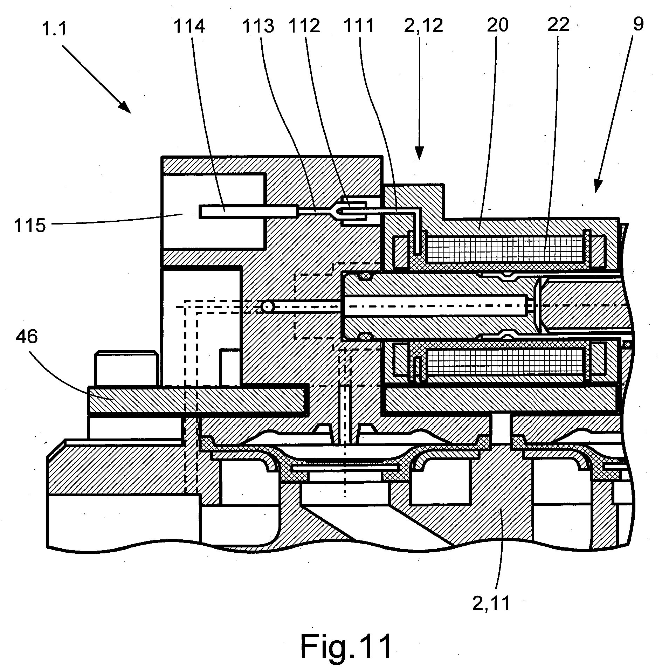

In einer zweiten Ausführungsform einer Anschlussbuchse 115 der Magnetspulen 21, 22 gemäß Fig. 11 sind zwar auch Anschlusskabel 111 der Magnetspulen 21, 22 innerhalb des Magnetmoduls 20 verlegt. Diese sind jedoch eingangsseitig aus dem Magnetmodul 20 herausgeführt und stehen über Steckverbindungen 112 mit Anschlusskabeln 113 in Verbindung, die in dem eingangsseitigen Luftführungsmodul 23 angeordnet sind und in Kontakten 114 der an dieses Luftführungsmodul 23 angeformten Anschlussbuchse 115 enden.

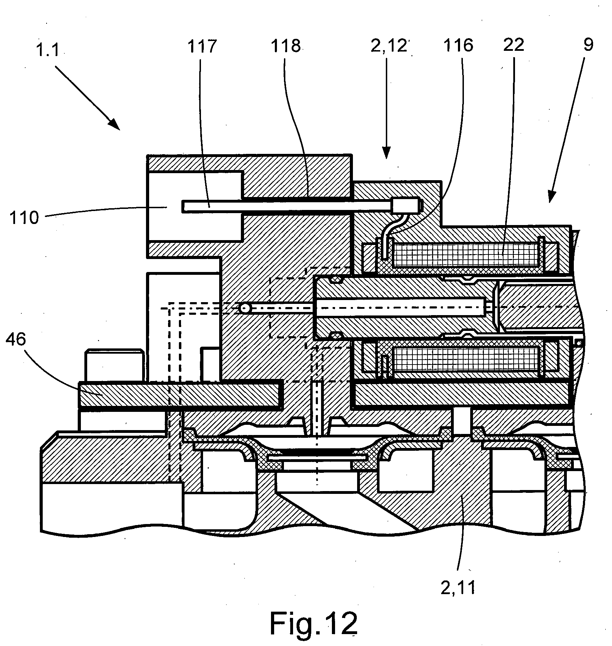

In einer dritten Ausführungsform einer Anschlussbuchse 119 der Magnetspulen 21, 22 gemäß Fig. 12 sind Anschlusskabel 116 der Magnetspulen 21, 22 innerhalb des Magnetmoduls 20 verlegt und enden in Kontakten 117, die stirnseitig aus dem Magnetmodul 20 herausragen und durch Öffnungen 118 in die an das eingangsseitige Luftführungsmodul 23 angeformte Anschlussbuchse 119 hineinragen.

### Bezugszeichen (Teil der Beschreibung)

1.1 Ventileinheit, erste Ausführungsform
1.2 Ventileinheit, zweite Ausführungsform
1.3 Ventileinheit, dritte Ausführungsform
2, 2', 2" Ventilgehäuse
3 Bremsdruckeingang
4 Bremsdruckausgang
5 Entlüftungsausgang
6 Einlassventil, Membranventil
7 Auslassventil, Membranventil
8, 8', 8" Vorsteuerventil von Einlassventil 6, Magnetventil
9, 9', 9" Vorsteuerventil von Auslassventil 7, Magnetventil
10 Teilungsebene
11, 11" Basisgehäuse
12, 12', 12" Gehäusedeckel
13 Längsrichtung von Ventilgehäuse 2, 2', 2"
14 Betätigungsachse von Einlassventil 6
15 Betätigungsachse von Auslassventil 7
16 Membran von Einlassventil 6
17 Membran von Auslassventil 7
18 Betätigungsachse von Vorsteuerventil 8, 8"
19 Betätigungsachse von Vorsteuerventil 9, 9"
20, 20', 20" Magnetmodul
21 Magnetspule von Vorsteuerventil 8, 8"
22 Magnetspule von Vorsteuerventil 9, 9"
23, 23', 23" Eingangsseitiges Luftführungsmodul
24, 24', 24" Ausgangsseitiges Luftführungsmodul
25, 25" Ventilbohrung von Vorsteuerventil 8, 8"
26, 26" Ventilbohrung von Vorsteuerventil 8, 8"
27, 27" Ventilbohrung von Vorsteuerventil 9, 9"
28, 28" Ventilbohrung von Vorsteuerventil 9, 9"
29, 29' Steuerkanal von Vorsteuerventil 8, 8', 8"
30, 30' Steuerkanal von Vorsteuerventil 8, 8', 8"
31, 31' Steuerkanal von Vorsteuerventil 8, 8', 8"
32, 32' Steuerkanal von Vorsteuerventil 9, 9', 9"
33, 33' Steuerkanal von Vorsteuerventil 9, 9', 9"
34, 34' Steuerkanal von Vorsteuerventil 9, 9', 9"
35 Steuerkammeroberteil von Einlassventil 6
36 Steuerkammeroberteil von Auslassventil 7
37 Steuerkammer von Einlassventil 6
38 Steuerkammer von Auslassventil 7
39, 39" Ventilkern von Vorsteuerventil 8, 8"
40, 40" Ventilanker von Vorsteuerventil 8, 8"
41, 41" Ventilfeder von Vorsteuerventil 8, 8"
42, 42" Ventilkern von Vorsteuerventil 9, 9"
43, 43" Ventilanker von Vorsteuerventil 9, 9"
44, 44" Ventilfeder von Vorsteuerventil 9, 9"
45 Verbindungselement
46 Befestigungsplatte
47 Ausnehmung von Luftführungsmodul 23, 23', 23"
48 Ausnehmung von Luftführungsmodul 24, 24', 24"
49 Querschlitz von Befestigungsplatte 46
50 Querschlitz von Befestigungsplatte 46
51 Querschlitz von Befestigungsplatte 46
52 Querschlitz von Befestigungsplatte 46
53 Quersteg von Luftführungsmodul 23, 23', 23"
54 Quersteg von Luftführungsmodul 23, 23', 23"
55 Quersteg von Luftführungsmodul 24, 24', 24"
56 Quersteg von Luftführungsmodul 24, 24', 24"
57 Bohrung von Befestigungsplatte 46
58 Schraube
59, 59" Ventilsitz von Vorsteuerventil 8, 8"
60, 60" Ventilsitz von Vorsteuerventil 9, 9"
61 Ventilsitz von Einlassventil 6
62 Ventilsitz von Auslassventil 7
63 Zentralkanal von Einlassventil 6
64 Zentralkanal von Auslassventil 7
65 Ringkanal von Einlassventil 6
66 Ringkanal von Auslassventil 7
67, 67" Verbindungskanal
68 Ventilpatrone von Vorsteuerventil 8
69 Ventilpatrone von Vorsteuerventil 9
70 Montagepfeil
71 Montagepfeil
72 Montagepfeil
73 Montagepfeil
74 Montageklammer
75 Montagepfeil
76. Montagepfeil
77 Montagepfeil
78 Montagepfeil
79 Montagepfeil
80 Montagepfeil
81 Montagepfeil
82 Montagepfeil
83 Doppelankermagnetventil
84 Magnetspule von Doppelankermagnetventil 83
85 Ventilsitz von Vorsteuerventil 8'
86 Ventilsitz von Vorsteuerventil 9'
87 Betätigungsachse von Vorsteuerventil 8', 9'
88 Ventilbohrung von Vorsteuerventil 8'
89 Ventilbohrung von Vorsteuerventil 9'
90 Zentraler Ventilkern von Vorsteuerventil 8', 9'
91 Ventilanker von Vorsteuerventil 8'
92 Ventilfeder von Vorsteuerventil 8'
93 äußerer Ventilkern von Vorsteuerventil 8'
94 Ventilanker von Vorsteuerventil 9'
95 Ventilfeder von Vorsteuerventil 9'
96 Äußerer Ventilkern von Vorsteuerventil 9'
97 Ventilpatrone
98 Schalldämpfer
99 Schalldämpfergehäuse
100 Eintrittsöffnung
101 Beruhigungskammer
102 Austrittsöffnung
103 Schalldämpfungseinlage
104 Grundgehäuse von Schalldämpfergehäuse 99
105 Gehäusedeckel von Schalldämpfergehäuse 99
106 Schraube
107 Dichtelement
108 Anschlusskabel von Magnetspule 21, 22
109 Kontakte von Anschlussbuchse 110
110 Anschlussbuchse von Magnetspule 21, 22
111 Anschlusskabel von Magnetspule 21, 22
112 Steckverbindung
113 Anschlusskabel von Magnetspule 21, 22
114 Kontakte von Anschlussbuchse 115
115 Anschlussbuchse von Magnetspule 21, 22
116 Anschlusskabel von Magnetspule 21, 22
117 Kontakte von Anschlussbuchse 119
118 Öffnung von Anschlussbuchse 119
119 Anschlussbuchse von Magnetspule 21, 22
120 Längsnuten im Ventilanker 40
121 Längsnuten im Ventilanker 43
122 Gehäuseboden des Schalldämpfergehäuses 99
S1 Montageschritt
S2 Montageschritt
S2a Zwischenschritt
S3 Montageschritt
S4 Montageschritt
S5 Montageschritt
S6 Montageschritt
S6a Zusatzschritt

## Patentansprüche

1. Ventileinheit (1.1, 1.2, 1.3) zur Druckmodulation in einer Druckluft-Bremsanlage, mit einem Bremsdruckeingang (3), einem Bremsdruckausgang (4) und einem Entlüftungsausgang (5), sowie mit einem als Membranventil ausgebildeten Einlassventil (6), einem als Membranventil ausgebildeten Auslassventil (7) und mit jeweils einem als
3/2-Wege-Magnetventil ausgebildeten Vorsteuerventil (8, 9) für jedes Membranventil
(6, 7), welche in einem länglichen Ventilgehäuse (2) angeordnet sind, das mit einer in Einbaulage weitgehend horizontalen Teilungsebene (10) in ein Basisgehäuse (11) und einen Gehäusedeckel (12) unterteilt ist, wobei der Bremsdruckeingang (3) und der Bremsdruckausgang (4) sowie der Entlüftungsausgang (5) in dem Basisgehäuse (11) angeordnet sind, die Membranventile (6, 7) in dem Basisgehäuse (11) zwischen dem Bremsdruckeingang (3) und dem Bremsdruckausgang (4) mit parallelen Betätigungsachsen (14, 15) und einer Anordnung der Membranen (16, 17) in einer gemeinsamen, weitgehend der Teilungsebene (10) entsprechenden Membranebene unter Einspannung zwischen dem Basisgehäuse (11) und dem Gehäusedeckel (12) in Längsrichtung (13) hintereinander angeordnet sind, sowie die Vorsteuerventile (8, 9) in dem Gehäusedeckel (12) angeordnet sind, **dadurch gekennzeichnet, dass** das Vorsteuerventil (8) des Einlassventils (6) und das Vorsteuerventil (9) des Auslassventils (7) in Längsrichtung (13) mit paralleler Ausrichtung ihrer Betätigungsachsen (18, 19) zu der Teilungsebene (10) weitgehend mittig über den Membranen (16, 17) des Einlassventils (6) und des Auslassventils (7) in dem Gehäusedeckel (12) angeordnet sind, und dass der Gehäusedeckel (12) aus einem zentral angeordneten, die Magnetspulen (21, 22) der Vorsteuerventile (8, 9) enthaltenden Magnetmodul (20) sowie aus zwei in Längsrichtung (13) jeweils stirnseitig an das Magnetmodul (20) angrenzend angeordneten, jeweils Ventilbohrungen (25, 26, 27, 28) und Steuerkanäle (29, 30, 31, 32, 33, 34) der Vorsteuerventile (8, 9) aufweisenden und jeweils mit einem Steuerkammeroberteil (35, 36) des benachbarten Einlassventils (6) oder Auslassventils (7) versehenen Luftführungsmodulen (23, 24) besteht, die über ein einziges Verbindungselement (45) sowohl miteinander als auch mit dem Basisgehäuse (11) verbunden sind.

2. Ventileinheit nach Anspruch 1, **dadurch gekennzeichnet, dass** das Verbindungselement (45) als eine ebene Befestigungsplatte (46) ausgebildet ist, die parallel zu der Teilungsebene (10) des Ventilgehäuses (2) in entsprechende, jeweils zwischen den Ventilbohrungen (25, 26, 27, 28) und dem betreffenden Steuerkammeroberteil (35, 36) angeordneten Ausnehmungen (47, 48) der Luftführungsmodule (23, 24) eingreift, und die mit einseitig offenen Querschlitzen (49, 50, 51, 52) jeweils mindestens einen rechtwinklig zu der Teilungsebene (10) und der Längsrichtung (13) des Ventilgehäuses (2) verlaufenden Quersteg (53, 54, 55, 56) der Luftführungsmodule (23, 24) umfasst, und die Bohrungen (57) zur Verschraubung des Gehäusedeckels (12) mit dem Basisgehäuse (11) aufweist.

3. Ventileinheit nach Anspruch 2, **dadurch gekennzeichnet, dass** die Steuerkanäle (29, 30, 31, 32, 33, 34) der Vorsteuerventile (8, 9) in den Querstegen (53, 54, 55, 56) der Luftführungsmodule (23, 24) angeordnet sind.

4. Ventileinheit nach einem der Ansprüche 1 bis 3, **dadurch gekennzeichnet, dass** die Vorsteuerventile (8, 9) als separate Magnetventile ausgeführt sind, die mit entgegengesetzter Schaltrichtung und jeweils der Membran (16, 17) des zugeordneten Einlass- oder Auslassventils (6, 7) zugewandtem Ventilsitz (59, 60) achsparallel und radial benachbart zueinander in dem Magnetmodul (20) und den Luftführungsmodulen (23, 24) angeordnet sind.

5. Ventileinheit nach Anspruch 4, **dadurch gekennzeichnet, dass** beiden Ventilsitze (59, 60) einstückig mit dem jeweils zugeordneten Luftführungsmodul (23, 24) verbunden sind.

6. Ventileinheit nach Anspruch 4, **dadurch gekennzeichnet, dass** die mechanischen Bauteile (39, 40, 41; 42, 43, 44, 59, 59', 60, 60') der Magnetventile (8, 9) jeweils in einer Ventilpatrone (68, 69) zusammengefasst sind.

7. Ventileinheit nach einem der Ansprüche 1 bis 3, **dadurch gekennzeichnet, dass** die Vorsteuerventile (8', 9') in einem Doppelankermagnetventil (83) mit einer gemeinsamen Magnetspule (84) zusammengefasst sind, in dem die einzelnen Magnetventile (8', 9') mit entgegengesetzter Schaltrichtung und jeweils der Membran (16, 17) des zugeordneten Einlassventils (6) oder Auslassventils (7) zugewandtem Ventilsitz (85, 86) koaxial sowie axial benachbart zueinander in dem Magnetblock (20') und in den Luftführungsmodulen (23', 24') angeordnet sind.

8. Ventileinheit nach Anspruch 7, **dadurch gekennzeichnet, dass** die Magnetspule (84) des Doppelankermagnetventils (83) mit einem niedrigen und einem hohen Strom bestrombar ist, und dass die Vorsteuerventile (8', 9') derart ausgebildet sind, dass das dem Einlassventil (6) zugeordnete Magnetventil (8') durch eine Bestromung der Magnetspule (84) mit dem niedrigen Strom umgeschaltet wird, wogegen das dem Auslassventil (7) zugeordnete Magnetventil (9') erst durch eine Bestromung der Magnetspule (84) mit dem hohen Strom umgeschaltet wird.

9. Ventileinheit nach Anspruch 7, **dadurch gekennzeichnet, dass** die Magnetspule (84) des Doppelankermagnetventils (83) einen Mittelabgriff zur Teilbestromung aufweist, und dass die Vorsteuerventile (8', 9') derart ausgebildet sind, dass das dem Einlassventil (6) zugeordnete Magnetventil (8') durch eine Teilbestromung der Magnetspule (84) umgeschaltet wird, wogegen das dem Auslassventil (7) zugeordnete Magnetventil (9') erst durch eine Vollbestromung der Magnetspule (84) umgeschaltet wird.

10. Ventileinheit nach einem der Ansprüche 7 bis 9, **dadurch gekennzeichnet, dass** die mechanischen Bauteile (90, 91, 92, 93, 94, 95, 96) des Doppelankermagnetventils (83) in einer Ventilpatrone (97) zusammengefasst sind, wobei die mechanischen Bauteile (90, 91, 92, 93, 94, 95, 96) zumindest eines Magnetventils (8', 9') einen in Richtung ihres Ventilsitzes (85, 86) nicht ansteigenden Außendurchmesser aufweisen.

11. Ventileinheit nach einem der Ansprüche 1 bis 10, **dadurch gekennzeichnet, dass** das Magnetmodul (20") und eines der Luftführungsmodule (24") einstückig ausgebildet sind, wobei die mechanischen Bauteile (42", 43", 44") zumindest desjenigen Magnetventils (9"), dessen Ventilsitz (60") in der Ventilbohrung (27") des betreffenden Luftführungsmoduls (24") angeordnet ist, einen in Richtung des Ventilsitzes (60") nicht ansteigenden Außendurchmesser aufweisen.

12. Ventileinheit nach Anspruch 11, **dadurch gekennzeichnet, dass** zumindest dasjenige Magnetventil (9"), dessen Ventilsitz (60") in der Ventilbohrung (27") des betreffenden Luftführungsmoduls (24") angeordnet ist, eine innenliegende Ventilfeder (44") aufweist, die zwischen dem betreffenden Ventilanker (43") und dem zugeordneten Ventilkern (42") angeordnet ist.

13. Ventileinheit nach einem der Ansprüche 1 bis 12, **dadurch gekennzeichnet, dass** Anschlusskabel (108) der Magnetspulen (21, 22) innerhalb des Magnetmoduls (20) verlegt sind und in Kontakten (109) einer an das Magnetmodul (20) angeformten Anschlussbuchse (110) enden.

14. Ventileinheit nach einem der Ansprüche 1 bis 12, **dadurch gekennzeichnet, dass** Anschlusskabel (111) der Magnetspulen (21, 22) innerhalb des Magnetmoduls (20) verlegt sind, die über Steckverbindungen (112) mit Anschlusskabeln (113) verbunden sind, welche in einem Luftführungsmodul (23) angeordnet sind und in Kontakten (114) einer an dieses Luftführungsmodul (23) angeformten Anschlussbuchse (115) enden.

15. Ventileinheit nach einem der Ansprüche 1 bis 12, **dadurch gekennzeichnet, dass** Anschlusskabel (116) der Magnetspulen (21, 22) innerhalb des Magnetmoduls (20) verlegt sind und in Kontakten (117) enden, die stirnseitig aus dem Magnetmodul (20) herausragen und durch Öffnungen (118) in eine an ein Luftführungsmodul (23) angeformte Anschlussbuchse (119) hineinragen.

## Claims

1. Valve unit (1.1, 1.2, 1.3) for modulating pressure in a compressed air braking system, with a brake pressure input (3), a brake pressure output (4) and a purge output (5), and with an inlet valve (6) configured as a diaphragm valve, an outlet valve (7) configured as a diaphragm valve and with, for each diaphragm valve (6, 7), respective precontrol valves (8, 9) which are each configured as a 3/2-way solenoid valve and are arranged in an elongate valve housing (2), which is divided by a division plane (10) that is largely horizontal in the installation position into a base housing (11) and a housing cover (12), wherein the brake pressure input (3) and the brake pressure output (4) and the purge output (5) are arranged in the base housing (11), the diaphragm valves (6, 7) are arranged behind each other in the longitudinal direction (13) in the base housing (11) between the brake pressure input (3) and the brake pressure output (4), with parallel actuation axes (14, 15) and with diaphragms (16, 17) arranged in a common diaphragm plane, largely corresponding to the division plane (10), and clamped between the base housing (11) and the housing cover (12), and the precontrol valves (8, 9) are arranged in the housing cover (12), **characterized in that** the precontrol valve (8) of the inlet valve (6) and the precontrol valve (9) of the outlet valve (7) are arranged in the housing cover (12) in the longitudinal direction (13), with orientation of their actuation axes (18, 19) parallel to the division plane (10), largely centrally over the diaphragms (16, 17) of the inlet valve (6) and the outlet valve (7), and that the housing cover (12) consists of a centrally arranged magnet module (20) containing the magnetic coils (21, 22) of the precontrol valves (8, 9) and of two air guide modules (23, 24) arranged each at the end adjacent to the magnet module (20) in the longitudinal direction (13), each comprising valve bores (25, 26, 27, 28) and control channels (29, 30, 31, 32, 33, 34) of the precontrol valves (8, 9), and each provided with a control chamber upper part (35, 36) of the adjacent inlet valve (6) or outlet valve (7), and connected via a single connecting element (45) both to each other and to the base housing (11).

2. Valve unit according to Claim 1, **characterized in that** the connecting element (45) is configured as a flat fixing plate (46) which, parallel to the division plane (10) of the valve housing (2), engages in corresponding recesses (47, 48) of the air guide module (23, 24) each arranged between the valve bores (25, 26, 27, 28) and the associated control chamber upper part (35, 36), and which, with unilaterally open transverse slots (49, 50, 51, 52) surrounds respectively at least one transverse web (53, 54, 55, 56) of the air guide module (23, 24) running at right angles to the division plane (10) and to the longitudinal direction (13) of the valve housing (2), and which comprises bores (57) for bolting the housing cover (12) to the base housing (11).

3. Valve unit according to Claim 2, **characterized in that** the control channels (29, 30, 31, 32, 33, 34) of the precontrol valves (8, 9) are arranged in the transverse webs (53, 54, 55, 56) of the air guide module (23, 24).

4. Valve unit according to any of Claims 1 to 3, **characterized in that** the precontrol valves (8, 9) are configured as separate solenoid valves which, each with opposite switching direction and with valve seat (59, 60) facing the diaphragm (16, 17) of the assigned inlet or outlet valve (6, 7), are each arranged axially parallel and radially adjacent to each other in the magnet module (20) and the air guide modules (23, 24).

5. Valve unit according to Claim 4, **characterized in that** the two valve seats (59, 60) are integrally connected to the respective assigned air guide module (23, 24).

6. Valve unit according to Claim 4, **characterized in that** the mechanical components (39, 40, 41, 42, 43, 44, 59, 59', 60, 60') of the solenoid valves (8, 9) are combined in a respective valve cartridge (68, 69).

7. Valve unit according to any of Claims 1 to 3, **characterized in that** the precontrol valves (8', 9') are combined in a double-rotor solenoid valve (83) with a common magnetic coil (84), in which the individual solenoid valves (8', 9'), with opposite switching direction and with valve seat (85, 86) facing the diaphragm (16, 17) of the assigned inlet valve (6) or outlet valve (7), are arranged coaxially and axially adjacent to each other in the magnet block (20') and in the air guide modules (23', 24').

8. Valve unit according to Claim 7, **characterized in that** the magnetic coil (84) of the double-rotor solenoid valve (83) can be powered with a low and a high current, and that the precontrol valves (8', 9') are configured such that the solenoid valve (8') assigned to the inlet valve (6) is switched by powering the magnetic coil (84) with the low current, whereas the solenoid valve (9') assigned to the outlet valve (7) is only switched by powering the magnetic coil (84) with the high current.

9. Valve unit according to Claim 7, **characterized in that** the magnetic coil (84) of the double-rotor solenoid valve (83) has a central take-off for partial powering, and that the precontrol valves (8', 9') are configured such that the solenoid valve (8') assigned to the inlet valve (6) is switched by a partial powering of the magnetic coil (84), whereas the solenoid valve (9') assigned to the outlet valve (7) is only switched by a full powering of the magnetic coil (84).

10. Valve unit according to any of Claims 7 to 9, **characterized in that** the mechanical components (90, 91, 92, 93, 94, 95, 96) of the double-rotor solenoid valve (83) are combined in a valve cartridge (97), wherein the mechanical components (90, 91, 92, 93, 94, 95, 96) of at least one solenoid valve (8', 9') have an outer diameter which does not increase in the direction of its valve seat (85, 86).

11. Valve unit according to any of Claims 1 to 10, **characterized in that** the magnet module (20") and one of the air guide modules (24") are configured integrally, wherein the mechanical components (42", 43", 44") of at least the solenoid valve (9") whose valve seat (60") is arranged in the valve bore (27") of the respective air guide module (24") have an outer diameter which does not increase in the direction of its valve seat (60").

12. Valve unit according to Claim 11, **characterized in that** at least the solenoid valve (9") whose valve seat (60") is arranged in the valve bore (27") of the respective air guide module (24") has an internal valve spring (44") which is arranged between the respective valve rotor (43") and the assigned valve core (42").

13. Valve unit according to any of Claims 1 to 12, **characterized in that** connecting cables (108) of the magnetic coils (21, 22) are routed within the magnet module (20) and terminate in contacts (109) of a connecting bush (110) formed on the magnet module (20).

14. Valve unit according to any of Claims 1 to 12, **characterized in that** connecting cables (111) of the magnetic coils (21, 22) are routed within the magnet module (20) and are connected via plug connections (112) to connecting cables (113) which are arranged in an air guide module (23) and which terminate in contacts (114) of a connecting bush (115) formed on the magnet module (23).

15. Valve unit according to any of Claims 1 to 12, **characterized in that** connecting cables (116) of the magnetic coils (21, 22) are routed within the magnet module (20) and terminate in contacts (117) which protrude at the end face from the magnet module (20) and which extend through openings (118) into a connecting bush (119) formed on an air guide module (23).

## Revendications

1. Unité de soupape (1.1, 1.2, 1.3) pour la modulation de pression dans une installation de frein à air comprimé, comprenant une entrée de pression de frein (3), une sortie de pression de frein (4) et une sortie de désaérage (5), ainsi qu'une soupape d'entrée (6) réalisée sous forme de soupape à membrane, une soupape de sortie (7) réalisée sous forme de soupape à membrane et à chaque fois une soupape pilote (8, 9) réalisée sous forme d'électrovanne 3/2 voies pour chaque soupape à membrane (6, 7), lesquelles sont disposées dans un boîtier de soupape allongé (2) qui est divisé par un plan de séparation (10) essentiellement horizontal dans la position d'installation en un boîtier de base (11) et en un couvercle de boîtier (12), l'entrée de pression de frein (3) et la sortie de pression de frein (4) ainsi que la sortie du désaérage (5) étant disposées dans le boîtier de base (11), les soupapes à membrane (6, 7) étant disposées l'une derrière l'autre dans la direction longitudinale (13) dans le boîtier de base (11) entre l'entrée de pression de frein (3) et la sortie de pression de frein (4) avec des axes d'actionnement parallèles (14, 15) et un agencement des membranes (16, 17) dans un plan de membrane commun, correspondant essentiellement au plan de séparation (10), par serrage entre le boîtier de base (11) et le couvercle de boîtier (12), et les soupapes pilotes (8, 9) étant disposées dans le couvercle de boîtier (12), **caractérisée en ce que** la soupape pilote (8) de la soupape d'entrée (6) et la soupape pilote (9) de la soupape de sortie (7) sont disposées dans la direction longitudinale (13) avec une orientation de leurs axes d'actionnement (18, 19) parallèle au plan de séparation (10), essentiellement centralement au-dessus des membranes (16, 17) de la soupape d'entrée (6) et de la soupape de sortie (7) dans le couvercle de boîtier (12), et **en ce que** le couvercle de boîtier (12) est constitué d'un module magnétique (20) disposé centralement, contenant les bobines magnétiques (21, 22) des soupapes pilotes (8, 9) ainsi que de deux modules de guidage d'air (23, 24) disposés dans la direction longitudinale (13) à chaque fois du côté frontal à côté du module magnétique (20), présentant chacun des alésages de soupape (25, 26, 27, 28) et des conduits de commande (29, 30, 31, 32, 33, 34) des soupapes pilotes (8, 9), et étant chacun pourvus d'une partie supérieure de chambre de commande (35, 36) de la soupape d'entrée adjacente (6) ou de la soupape de sortie adjacente (7), lesquels modules sont connectés par le biais d'un élément de connexion unique (45) unique ainsi que les uns aux autres ainsi qu'au boîtier de base (11).

2. Unité de soupape selon la revendication 1, **caractérisée en ce que** l'élément de connexion (45) est réalisé sous forme de plaque de fixation plane (46) qui vient en prise parallèlement au plan de séparation (10) du boîtier de soupape (2) dans des évidements correspondants (47, 48) des modules de guidage d'air (23, 24) disposés à chaque fois entre les alésages de soupape (25, 26, 27, 28) et la partie supérieure de chambre de commande concernée (35, 36), et qui présente, avec des fentes transversales ouvertes d'un côté (49, 50, 51, 52) à chaque fois au moins une nervure transversale (53, 54 55, 56) des modules de guidage d'air (23, 24) s'étendant à angle droit par rapport au plan de séparation (10) et à la direction longitudinale (13) du boîtier de soupape (2), et qui présente les alésages (57) pour visser le couvercle de boîtier (12) au boîtier de base (11).

3. Unité de soupape selon la revendication 2, **caractérisée en ce que** les canaux de commande (29, 30, 31, 32, 33, 34) des soupapes pilotes (8, 9) sont disposés dans les nervures transversales (53, 54, 55, 56) des modules de guidage d'air (23, 24).

4. Unité de soupape selon l'une quelconque des revendications 1 à 3, **caractérisée en ce que** les soupapes pilotes (8,9) sont réalisées sous forme d'électrovannes séparées qui sont disposées avec une direction de commutation opposée et à chaque fois le siège de soupape (59, 60) tourné vers la membrane (16, 17) de la soupape d'entrée ou de sortie associée (6, 7), avec leurs axes parallèles et radialement à côté l'une de l'autre dans le module magnétique (20) et les modules de guidage d'air (23, 24).

5. Unité de soupape selon la revendication 4, **caractérisée en ce que** les deux sièges de soupape (59, 60) sont connectés d'une seule pièce au module de guidage d'air (23, 24) respectivement associé.

6. Unité de soupape selon la revendication 4, **caractérisée en ce que** les composants mécaniques (39, 40, 41 ; 42, 43, 44, 59, 59', 60, 60') des électrovannes (8, 9) sont à chaque fois réunis dans une cartouche de soupape (68, 69).

7. Unité de soupape selon l'une quelconque des revendications 1 à 3, **caractérisée en ce que** les soupapes pilotes (8', 9') sont réunies dans une électrovanne à double induit (83) ayant une bobine magnétique commune (84), dans laquelle sont disposées les électrovannes individuelles (8', 9') avec un sens de commutation opposé et le siège de soupape (85, 86) tourné à chaque fois vers la membrane (16, 17) de la soupape d'entrée (6) ou de la soupape de sortie (7) associée, coaxialement et axialement à côté l'une de l'autre dans le bloc magnétique (20') et dans les modules de guidage d'air (23', 24').

8. Unité de soupape selon la revendication 7, **caractérisée en ce que** la bobine magnétique (84) de l'électrovanne à double induit (83) peut être alimentée avec un courant faible et un courant fort, et **en ce que** les soupapes pilotes (8', 9') sont réalisées de telle sorte que l'électrovanne (8') associée à la soupape d'entrée (6) soit commutée par une alimentation de la bobine magnétique (84) avec le courant faible, tandis que l'électrovanne (9') associée à la soupape de sortie (7) est seulement commutée par une alimentation de la bobine magnétique (84) avec le courant fort.

9. Unité de soupape selon la revendication 7, **caractérisée en ce que** la bobine magnétique (84) de l'électrovanne à double induit (83) présente une prise médiane pour l'alimentation partielle en courant, et **en ce que** les soupapes pilotes (8', 9') sont réalisées de telle sorte que l'électrovanne (8') associée à la soupape d'entrée (6) soit commutée par une alimentation en courant partielle de l'électrovanne (84), tandis que l'électrovanne (9') associée à la soupape de sortie (7) est seulement connectée par alimentation en courant totale de la bobine magnétique (84).

10. Unité de soupape selon l'une quelconque des revendications 7 à 9, **caractérisée en ce que** les composants mécaniques (90, 91, 92, 93, 94, 95, 96) de l'électrovanne à double induit (83) sont réunis dans une cartouche de soupape (97), les composants mécaniques (90, 91, 92, 93, 94, 95, 96) d'au moins une électrovanne (8', 9') présentant un diamètre extérieur n'augmentant pas dans la direction de son siège de soupape (85, 86).

11. Unité de soupape selon l'une quelconque des revendications 1 à 10, **caractérisée en ce que** le module magnétique (20") et l'un des modules de guidage d'air (24") sont réalisés d'une seule pièce, les composants mécaniques (42", 43", 44") au moins de l'électrovanne (9") dont le siège de soupape (60") est disposé dans l'alésage de soupape (27") du module de guidage d'air concerné (24"), présentant un diamètre extérieur n'augmentant pas dans la direction du siège de soupape (60").

12. Unité de soupape selon la revendication 11, **caractérisée en ce qu'**au moins l'électrovanne (9") dont le siège de soupape (60") est disposé dans l'alésage de soupape (27") du module de guidage d'air concerné (24"), présente un ressort de soupape (44") situé à l'intérieur, qui est disposé entre l'induit de soupape concerné (43") et le noyau de soupape associé (42").

13. Unité de soupape selon l'une quelconque des revendications 1 à 12, **caractérisée en ce que** des câbles de raccordement (108) des électrovannes (21, 22) sont posés à l'intérieur du module magnétique (20) et se terminent par des contacts (109) d'une douille de raccordement (110) formée au niveau du module magnétique (20).

14. Unité de soupape selon l'une quelconque des revendications 1 à 12, **caractérisée en ce que** des câbles de raccordement (111) des électrovannes (21, 22) sont posés à l'intérieur du module magnétique (20), lesquels sont connectés par le biais de connexions enfichables (112) aux câbles de raccordement (113) qui sont disposés dans un module de guidage d'air (23) et qui se terminent par des contacts (114) d'une douille de raccordement (115) formée au niveau de ce module de guidage d'air (23).

15. Unité de soupape selon l'une quelconque des revendications 1 à 12, **caractérisée en ce que** des câbles de raccordement (116) des bobines magnétiques (21, 22) sont posés à l'intérieur du module magnétique (20) et se terminent par des contacts (117) qui sortent du côté frontal hors du module magnétique (20) et qui pénètrent à travers des ouvertures (118) dans une douille de raccordement (119) formée au niveau d'un module de guidage d'air (23).
